# EUROPEAN PATENT SPECIFICATION

(11) **EP 4 203 554 B1**
(45) Date of publication and mention of the grant of the patent: **28.10.2026**
(21) Application number: 21869817.3
(22) Date of filing: 17.09.2021
(51) Int. Cl.: H04W 36/00, H04W 76/15, H04W 76/19, H04W 36/36

(54) **METHOD AND DEVICE FOR SIGNALING CELL LIST IN CONDITIONAL CELL ADDITION**
VERFAHREN UND VORRICHTUNG ZUR SIGNALISIERUNG EINER ZELLENLISTE BEI BEDINGTER ZELLENADDITION
PROCÉDÉ ET DISPOSITIF DE SIGNALISATION D'UNE LISTE DE CELLULES DANS UNE ADDITION CELLULAIRE CONDITIONNELLE

(30) Priority: 21.09.2020 KR 20200121741; 07.10.2020 KR 20200129697
(43) Date of publication of application: 28.06.2023
(73) Proprietor: Samsung Electronics Co., Ltd., Suwon-si, Gyeonggi-do 16677 (KR)
(72) Inventor: HWANG, June, Suwon-si, Gyeonggi-do 16677 (KR); KIM, Soenghun, Suwon-si, Gyeonggi-do 16677 (KR)
(74) Representative: Gulde & Partner
(86) International application number: PCT/KR2021/012911
(87) International publication number: WO 2022/060195

(56) References cited:
- EP-A1- 3 606 144
- EP-A1- 3 749 016
- WO-A1-2019/161741
- WO-A1-2020/128848
- CATT: "TP for TS37.340 BLCR Conditional SN Addition&Change Procedure", vol. RAN WG3, no. Reno, NV, USA; 20191118 - 20191122, 9 November 2019 (2019-11-09), pages 1 - 28, XP051823910, Retrieved from the Internet <URL:https://ftp.3gpp.org/tsg_ran/WG3_Iu/TSGR3_106/Docs/R3-196727.zip R3-196727 TP for TS37.340 BLCR Conditional SN Addition&Change Procedure.doc> [retrieved on 20191109]
- QUALCOMM INCORPORATED: "Conditional PSCell addition/change", vol. RAN WG2, no. E-meeting; 20200817 - 20200828, 7 August 2020 (2020-08-07), XP051912376, Retrieved from the Internet <URL:https://ftp.3gpp.org/tsg_ran/WG2_RL2/TSGR2_111-e/Docs/R2-2007749.zip R2-2007749.docx> [retrieved on 20200807]
- CATT: "Introduction of Conditional PSCell Change for intra-SN without MN involvement", 3GPP DRAFT; R2-2005071, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20200601 - 20200612, 25 May 2020 (2020-05-25), Mobile Competence Centre ; 650, route des Lucioles ; F-06921 Sophia-Antipolis Cedex ; France , XP051890517
- "3rd Generation Partnership Project; Technical Specification Group Radio Access Network; Evolved Universal Terrestrial Radio Access (E-UTRA) and NR; Multi-connectivity; Stage 2 (Release 16)", 3GPP STANDARD; TECHNICAL SPECIFICATION; 3GPP TS 37.340, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V16.2.0, 24 July 2020 (2020-07-24), Mobile Competence Centre ; 650, route des Lucioles ; F-06921 Sophia-Antipolis Cedex ; France , pages 1 - 78, XP051925823
- ZTE CORPORATION, SANECHIPS: "Remaining issues for CPC", 3GPP DRAFT; R2-2005345, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20200601 - 20200612, 22 May 2020 (2020-05-22), Mobile Competence Centre ; 650, route des Lucioles ; F-06921 Sophia-Antipolis Cedex ; France , XP051888682
- FUTUREWEI: "Corrections on procedure for CPC complete", 3GPP DRAFT; R2-2005279, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. E-Conference ;20200601 - 20200612, 22 May 2020 (2020-05-22), Mobile Competence Centre ; 650, route des Lucioles ; F-06921 Sophia-Antipolis Cedex ; France , XP051888640

## Description

### [Technical Field]

The disclosure relates to a method and apparatus for a cell addition. Also, the disclosure relates to a method and apparatus for conditional cell addition and relates to a primary secondary cell (PSCell) addition.

### (Background Art]

To meet the demand for wireless data traffic having increased since deployment of 4G c ommunication systems, efforts have been made to develop an improved 5G or pre-5G communication system. Therefore, the 5G or pre-5G communication system is also called a 'Beyond 4G Network' or a 'Post LTE System' . The 5G communication system is considered to be implemented in higher frequency (m mWave) bands, e.g., 60GHz bands, so as to accomplish higher data rates. To decrease pr opagation loss of the radio waves and increase the transmission distance, the beamformi ng, massive multiple-input multiple-output (MIMO), Full Dimensional MIMO (FD-MIMO), array antenna, an analog beam forming, large scale antenna techniques are disc ussed in 5G communication systems. In addition, in 5G communication systems, develo pment for system network improvement is under way based on advanced small cells, clo ud Radio Access Networks (RANs), ultra-dense networks, device-to-device (D2D) communication, wireless backhaul, moving network, cooperative commun ication, Coordinated Multi-Points (CoMP), reception-end interference cancellation and the like. In the 5G system, Hybrid FSK and QAM Mod ulation (FQAM) and sliding window superposition coding (SWSC) as an advanced codi ng modulation (ACM), and filter bank multi carrier (FBMC), non-orthogonal multiple access (NOMA), and sparse code multiple access (SCMA) as an adv anced access technology have been developed.

The Internet, which is a human centered connectivity network where humans generate a nd consume information, is now evolving to the Internet of Things (IoT) where distribut ed entities, such as things, exchange and process information without human interventio n. The Internet of Everything (IoE), which is a combination of the IoT technology and th e Big Data processing technology through connection with a cloud server, has emerged. As technology elements, such as "sensing technology", "wired/wireless communication and network infrastructure", "service interface technology", and "Security technology" h ave been demanded for IoT implementation, a sensor network, a Machine-to-Machine (M2M) communication, Machine Type Communication (MTC), and so forth ha ve been recently researched. Such an IoT environment may provide intelligent Internet te chnology services that create a new value to human life by collecting and analyzing data generated among connected things. IoT may be applied to a variety of fields including smart home, smart building, smart city, smart car or connected cars, smart grid, health ca re, smart appliances and advanced medical services through convergence and combinatio n between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology. CATT: "TP for TS37.340 BLCR Conditional SN Addition&Change Procedure", 3GPP DRAFT; R3-196727, 3RD GENERATION PARTNERSHIP PROJECT (3GPP), vol. RAN WG3, no. Reno, NV, USA; 20191118 - 20191122 9 November 2019 (2019-11-09), pages 1-28, provides a secondary Node Addition procedure. WO 2019/161741 A1 discloses a secondary cell group adding method. QUALCOMM INCORPORATED: "Conditional PSCell addition/change", 3GPP DRAFT; R2-2007749, 3RD GENERATION PARTNERSHIP PROJECT (3GPP), vol. RAN WG2, no. E-meeting; 20200817 - 20200828 7 August 2020 (2020-08-07), discusses Conditional PSCell addition (CPA).

### [Disclosure of Invention]

### [Technical Problem]

A technical objective to be achieved in embodiments of the disclosure relates to an improved method and apparatus for a cell addition.

In addition, a technical objective to be achieved in embodiments of the present disclosure relates to conditional cell addition, and relates to a method and apparatus for adding and changing a PSCell (primary SCG cell or primary secondary cell).

Further, a technical objective to be achieved in embodiments of the disclosure relates to a method and apparatus for PSCell addition that enables the terminal to configure a secondary cell group (SCG) and perform data transmission/reception in a short time when the terminal adds a PSCell for dual connectivity (DC) by reducing the delay time occurring in the process of adding the PSCell if needed.

### [Solution to Problem]

The invention is set out in the appended set of claims. Embodiments not covered by the claims are present for illustration purposes only. According to an embodiment of the disclosure, a method performed by a first base station in a wireless communication system may include: transmitting, to a second base station operating at least one cell, a first message for conditional primary secondary cell (PSCell) addition including measurement results of a terminal for the at least one cell; in response to the first message, receiving, from the second base station, a second message including configuration information for a candidate target PSCell selected from among the at least one cell and at least one of frequency information related to the candidate target PSCell or a cell identifier of the candidate target PSCell; determining an execution condition for conditional PSCell addition related to the candidate target PSCell based on at least one of the frequency information or the cell identifier; and transmitting, to the terminal, a third message including the configuration information for the candidate target PSCell, information indicating the execution condition, and the conditional PSCell identifier.

According to an aspect of the disclosure, a method performed by a second base station in a wireless communication system may include: receiving, from a first base station, a first message for conditional primary secondary cell (PSCell) addition including measurement results of a terminal for at least one cell operated by the second base station; and in response to the first message, transmitting, to the first base station, a second message including configuration information for a candidate target PSCell selected from among the at least one cell and at least one of frequency information related to the candidate target PSCell or a cell identifier of the candidate target PSCell, wherein at least one of the frequency information or the cell identifier is used to determine an execution condition for conditional PSCell addition related to the candidate target PSCell, and wherein a third message including the configuration information for the candidate target PSCell and information indicating the execution condition is transmitted from the first base station to the terminal.

According to an aspect of the disclosure, a first base station in a wireless communication system may include: a transceiver; and a controller configured to control the transceiver to transmit, to a second base station operating at least one cell, a first message for conditional primary secondary cell (PSCell) addition including measurement results of a terminal for the at least one cell, control the transceiver to in response to the first message, receive, from the second base station, a second message including configuration information for a candidate target PSCell selected from among the at least one cell and at least one of frequency information related to the candidate target PSCell or a cell identifier of the candidate target PSCell, determine an execution condition for conditional PSCell addition related to the candidate target PSCell based on at least one of the frequency information or the cell identifier, and control the transceiver to transmit, to the terminal, a third message including the configuration information for the candidate target PSCell and information indicating the execution condition.

According to an aspect of the disclosure, a second base station in a wireless communication system may include: a transceiver; and a controller configured to control the transceiver to receive, from a first base station, a first message for conditional primary secondary cell (PSCell) addition including measurement results of a terminal for at least one cell operated by the second base station, and control the transceiver to in response to the first message, transmit, to the first base station, a second message including configuration information for a candidate target PSCell selected from among the at least one cell and at least one of frequency information related to the candidate target PSCell or a cell identifier of the candidate target PSCell, wherein at least one of the frequency information or the cell identifier is used to determine an execution condition for conditional PSCell addition related to the candidate target PSCell, and wherein a third message including the configuration information for the candidate target PSCell and information indicating the execution condition is transmitted from the first base station to the terminal.

### [Advantageous Effects of Invention]

According to an embodiment of the disclosure, when the terminal adds a PSCell for dual connectivity (DC), the terminal may configure a secondary cell group (SCG) in a short time and perform data transmission/reception by reducing the delay time occurring in the process of adding the PSCell if needed.

### [Brief Description of Drawings]

FIG. 1 is a diagram illustrating the architecture of an LTE system according to an embodiment of the disclosure.
FIG. 2 is a diagram illustrating the structure of radio protocols in the LTE system according to an embodiment of the disclosure.
FIG. 3 is a diagram illustrating the architecture of a next-generation mobile communication system according to an embodiment of the disclosure.
FIG. 4 is a diagram illustrating the structure of radio protocols in the next-generation mobile communication system according to an embodiment of the disclosure.
FIG. 5 is a block diagram showing the internal structure of a user equipment according to an embodiment of the disclosure.
FIG. 6 is a block diagram showing the configuration of a base station according to an embodiment of the disclosure.
FIG. 7 is a diagram depicting a procedure of conditional PSCell addition initiated by a master node (MN) according to an embodiment of the disclosure.
FIG. 8 is a flowchart illustrating operations performed by the MN when the SN does not transmit an additional threshold value for CPA condition information to the MN according to an embodiment of the disclosure.
FIG. 9 is a flowchart illustrating operations performed by the MN when the SN transmits an additional threshold value for CPA condition information to the MN according to an embodiment of the disclosure.
FIG. 10 is a diagram illustrating a scheme for the UE to store information related to CHO and CPA when CHO and CPA are simultaneously configured in the UE according to an embodiment of the disclosure.
FIG. 11 is a sequence diagram illustrating a method of performing CPA operation when CHO is successfully performed according to an embodiment of the disclosure.
FIG. 12 is a sequence diagram illustrating a method of performing CPA operation when normal handover is successfully performed according to an embodiment of the disclosure.
FIG. 13 is a sequence diagram illustrating a method of performing CPA operation according to an embodiment of the disclosure.
FIG. 14 is a sequence diagram illustrating a method of performing CPA operation when normal PSCell addition or SCG addition is performed according to an embodiment of the disclosure.
FIG. 15 is a sequence diagram illustrating a method of performing CPA operation when a procedure for SCG addition (or PSCell addition) or PSCell change fails in the middle according to an embodiment of the disclosure.
FIG. 16 is a sequence diagram illustrating a method of performing CPA operation when a CPA procedure fails in the middle according to an embodiment of the disclosure.
FIG. 17 is a sequence diagram illustrating a method of performing CPA operation when an SCG failure other than a CPA failure occurs according to an embodiment of the disclosure.

### [Mode for the Invention]

Hereinafter, exemplary embodiments of the disclosure will be described in detail with reference to the accompanying drawings. Here, it should be noted that the same components are denoted by the same reference symbols as much as possible in the accompanying drawings. In addition, detailed descriptions of well-known functions and configurations that may obscure the subject matter of the disclosure will be omitted.

In the description of embodiments of this specification, descriptions of technical details well known in the art and not directly related to the disclosure may be omitted. This is to more clearly convey the gist of the disclosure without obscurities by omitting unnecessary descriptions.

Likewise, in the drawings, some elements are exaggerated, omitted, or only outlined in brief. Also, the size of each element does not necessarily reflect the actual size. The same reference symbols are used throughout the drawings to refer to the same or corresponding parts.

Advantages and features of the disclosure and methods for achieving them will be apparent from the following detailed description of embodiments taken in conjunction with the accompanying drawings. However, the disclosure is not limited to the embodiments disclosed below but may be implemented in various different ways, the embodiments are provided only to complete the disclosure and to fully inform the scope of the disclosure to those skilled in the art to which the disclosure pertains, and the disclosure is defined only by the scope of the claims. The same reference symbols are used throughout the specification to refer to the same parts.

Meanwhile, it will be appreciated that blocks of a flowchart and a combination of flowcharts may be executed by computer program instructions. These computer program instructions may be loaded on a processor of a general purpose computer, special purpose computer, or programmable data processing equipment, and the instructions executed by the processor of a computer or programmable data processing equipment create a means for carrying out functions described in blocks of the flowchart. To implement the functionality in a certain way, the computer program instructions may also be stored in a computer usable or readable memory that is applicable in a specialized computer or a programmable data processing equipment, and it is possible for the computer program instructions stored in a computer usable or readable memory to produce articles of manufacture that contain a means for carrying out functions described in blocks of the flowchart. As the computer program instructions may be loaded on a computer or a programmable data processing equipment, when the computer program instructions are executed as processes having a series of operations on a computer or a programmable data processing equipment, they may provide steps for executing functions described in blocks of the flowchart.

Additionally, each block of a flowchart may correspond to a module, a segment or a code containing one or more executable instructions for executing one or more logical functions, or to a part thereof. It should also be noted that functions described by blocks may be executed in an order different from the listed order in some alternative cases. For example, two blocks listed in sequence may be executed substantially at the same time or executed in reverse order according to the corresponding functionality.

Here, the word "unit", "module", or the like used in the embodiments may refer to a software component or a hardware component such as an FPGA or ASIC capable of carrying out a function or an operation. However, "unit" or the like is not limited to hardware or software. A unit or the like may be configured so as to reside in an addressable storage medium or to drive one or more processors. For example, units or the like may refer to components such as a software component, object-oriented software component, class component or task component, processes, functions, attributes, procedures, subroutines, program code segments, drivers, firmware, microcode, circuits, data, databases, data structures, tables, arrays, or variables. A function provided by a component and unit may be a combination of smaller components and units, and it may be combined with others to compose larger components and units. Further, components and units may be implemented to drive one or more processors in a device or a secure multimedia card. Those terms used in the following description for identifying an access node, indicating a network entity, indicating a message, indicating an interface between network entities, and indicating various identification information are taken as illustration for ease of description. Accordingly, the disclosure is not limited by the terms to be described later, and other terms referring to objects having an equivalent technical meaning may be used.

For convenience of description, the disclosure uses terms and names defined in the 3GPP LTE (3rd Generation Partnership Project Long Term Evolution) standards. However, the disclosure is not limited by the above terms and names, and can be equally applied to systems conforming to other standards.

In various embodiments of the disclosure, a master node (MN) may be interpreted as a master base station, and a secondary node (SN) may be interpreted as a secondary base station. Further, in various embodiments of the disclosure, the MN and the SN may be interpreted as different base stations, may be interpreted as base stations using different radio access technologies (RATs), and may be used as base stations using the same RAT in some cases. The MN and SN may be distinguished using generic terms such as a first base station, a second base station, and the like.

In various embodiments of the disclosure, a radio resource control (RRC) message transmitted by the MN may be referred to as an MN RRC message. In addition, an RRC message generated by the SN may be called an SN RRC message.

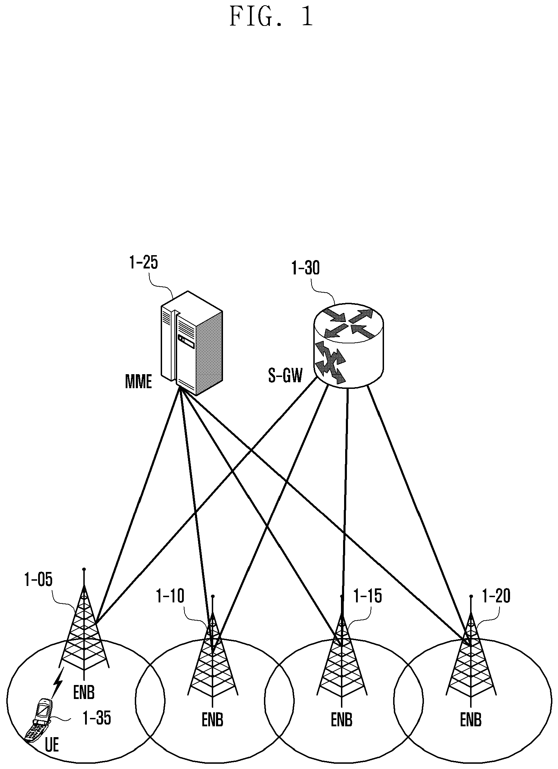

FIG. 1 is a diagram illustrating the architecture of an LTE system according to an embodiment of the disclosure.

With reference to FIG. 1, as illustrated, the radio access network of the long term evolution (LTE) system may be composed of a next-generation base station (evolved node B, ENB, Node B or base station) 1-05, 1-10, 1-15 or 1-20, a mobility management entity (MME) 1-25, and a serving-gateway (S-GW) 1-30. A user equipment (UE or terminal) 1-35 may connect to an external network through the ENB 1-05, 1-10, 1-15 or 1-20 and the S-GW 1-30.

In FIG. 1, the ENBs 1-05, 1-10, 1-15 and 1-20 may correspond to existing Node Bs of the UMTS system. The ENB is connected to the UE 1-35 through a radio channel, but may perform more complex functions in comparison to the existing Node B. In the LTE system, all user traffic including real-time services like VoIP (Voice over IP) services may be served through shared channels. Hence, an apparatus is needed to perform scheduling on the basis of collected status information regarding buffers, available transmit powers and channels of the UEs, and the ENBs 1-05, 1-10, 1-15 and 1-20 can be responsible for this. One ENB may control multiple cells in a typical situation. To achieve a data rate of, for example, 100 Mbps in a bandwidth of, for example, 20 MHz, the LTE system may utilize orthogonal frequency division multiplexing (OFDM) as radio access technology. Also, the LTE system may apply adaptive modulation and coding (AMC) to determine the modulation scheme and channel coding rate according to channel states of the UE. The S-GW 1-30 is an entity providing data bearers, and may create and remove data bearers under the control of the MME 1-25. The MME is an entity in charge of various control functions including a mobility management function for the UE, and may be connected to a plurality of ENBs 1-05, 1-10, 1-15 and 1-20.

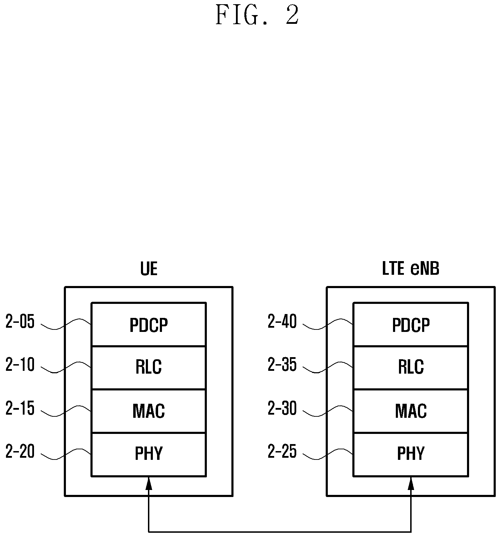

FIG. 2 is a diagram illustrating the structure of radio protocols in the LTE system according to an embodiment of the disclosure.

With reference to FIG. 2, in a UE or an ENB, the radio protocols of the LTE system may be composed of packet data convergence protocol (PDCP) 2-05 or 2-40, radio link control (RLC) 2-10 or 2-35, and medium access control (MAC) 2-15 or 2-30. The PDCP 2-05 or 2-40 may perform compression and decompression of IP headers. The main functions of the PDCP 2-05 or 2-40 may be summarized as follows.
- Header compression and decompression function (header compression and decompression: ROHC only)
- User data transfer function (transfer of user data)
- In-sequence delivery function (in-sequence delivery of upper layer PDUs at PDCP re-establishment procedure for RLC AM)
- Reordering function (for split bearers in DC (only support for RLC AM): PDCP PDU routing for transmission and PDCP PDU reordering for reception)
- Duplicate detection function (duplicate detection of lower layer SDUs at PDCP re-establishment procedure for RLC AM)
- Retransmission function (retransmission of PDCP SDUs at handover and, for split bearers in DC, of PDCP PDUs at PDCP data-recovery procedure, for RLC AM)
- Cipher and decipher function (ciphering and deciphering)
- Timer-based SDU discard function (timer-based SDU discard in uplink)

The radio link control (RLC) 2-10 or 2-35 may reconfigure PDCP PDUs (packet data unit) to a suitable size and perform automatic repeat request (ARQ) operation. The main functions of the RLC 2-10 or 2-35 may be summarized as follows.
- Data transfer function (transfer of upper layer PDUs)
- ARQ function (error correction through ARQ (only for AM data transfer))
- Concatenation, segmentation and reassembly function (concatenation, segmentation and reassembly of RLC SDUs (only for UM and AM data transfer))
- Re-segmentation function (re-segmentation of RLC data PDUs (only for AM data transfer))
- Reordering function (reordering of RLC data PDUs (only for UM and AM data transfer))
- Duplicate detection function (duplicate detection (only for UM and AM data transfer))
- Error detection function (protocol error detection (only for AM data transfer))
- RLC SDU discard function (RLC SDU discard (only for UM and AM data transfer))
- RLC re-establishment function (RLC re-establishment)

The MAC 2-15 or 2-30 may be connected with multiple RLC entities in the UE, and it may multiplex RLC PDUs into MAC PDUs and demultiplex MAC PDUs into RLC PDUs. The main functions of the MAC 2-15 or 2-30 may be summarized as follows.
- Mapping function (mapping between logical channels and transport channels)
- Multiplexing and demultiplexing function (multiplexing/demultiplexing of MAC SDUs belonging to one or different logical channels into/from transport blocks (TB) delivered to/from the physical layer on transport channels)
- Scheduling information reporting function (scheduling information reporting)
- HARQ (hybrid automatic repeat request) function (error correction through HARQ)
- Priority handling function between logical channels (priority handling between logical channels of one UE)
- Priority handling function between UEs (priority handling between UEs by means of dynamic scheduling)
- MBMS service identification function (MBMS service identification)
- Transport format selection function (transport format selection)
- Padding function (padding)

The physical (PHY) layer 2-20 or 2-25 may convert higher layer data into OFDM symbols by means of channel coding and modulation and transmit the OFDM symbols through a radio channel, or it may demodulate OFDM symbols received through a radio channel, perform channel decoding, and forward the result to a higher layer.

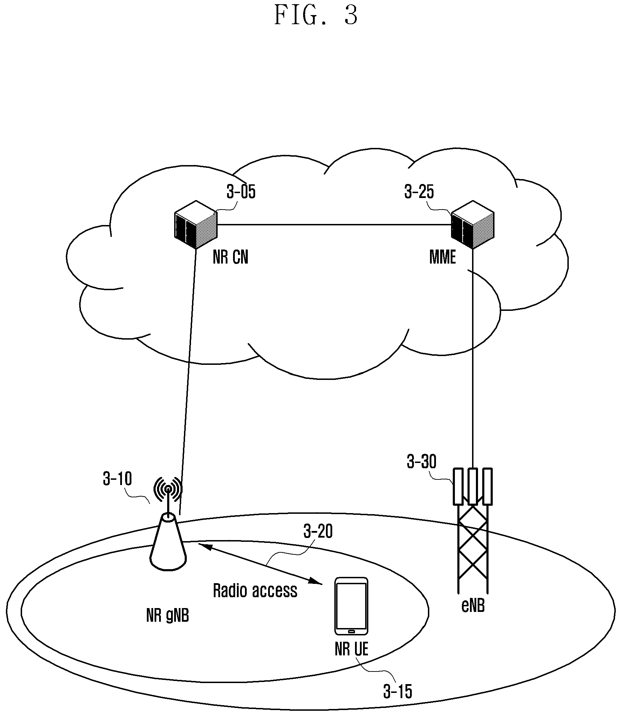

FIG. 3 is a diagram illustrating the architecture of a next-generation mobile communication system according to an embodiment of the disclosure.

With reference to FIG. 3, the radio access network of the next-generation mobile communication system (hereinafter, NR or 5G) may be composed of a next-generation base station (new radio node B, gNB, NR NB, NR gNB, or NR base station) 3-10 and a next-generation core network (new radio core network, NR CN) 3-05. A new radio user equipment (NR UE or terminal) 3-15 may connect to an external network through the NR gNB 3-10 and the NR CN 3-05.

In FIG. 3, the NR gNB 3-10 may correspond to an evolved node B (eNB) of the existing LTE system. The NR gNB 3-10 may be connected to the NR UE 3-15 through a radio channel, and it can provide a more superior service than that of the existing node B. All user traffic may be serviced through shared channels in the next-generation mobile communication system. Hence, there is a need for an entity that performs scheduling by collecting status information, such as buffer states, available transmission power states, and channel states of individual UEs, and the NR NB 3-10 may take charge of this. One NR gNB may control a plurality of cells. In the next-generation mobile communication system, to implement ultra-high-speed data transmission compared with current LTE, a bandwidth beyond the existing maximum bandwidth may be utilized. Also, a beamforming technology may be additionally combined with orthogonal frequency division multiplexing (OFDM) serving as a radio access technology.. Further, an adaptive modulation and coding (AMC) scheme determining a modulation scheme and channel coding rate to match the channel state of the UE may be applied. The NR CN 3-05 may perform functions such as mobility support, bearer configuration, and quality of service (QoS) configuration. The NR CN 3-05 is an entity taking charge of not only mobility management but also various control functions for the UE, and may be connected to a plurality of base stations. In addition, the next-generation mobile communication system may interwork with the existing LTE system, and the NR CN 3-05 may be connected to the MME 3-25 through a network interface.

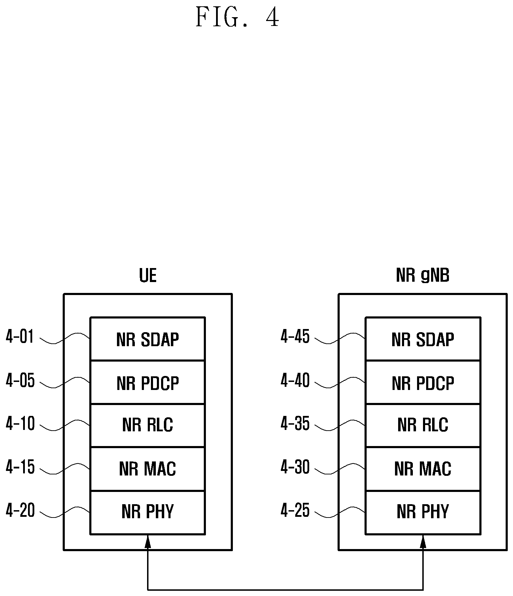

FIG. 4 is a diagram illustrating the structure of radio protocols in the next-generation mobile communication system according to an embodiment of the disclosure.

With reference to FIG. 4, in a UE or an NR gNB, the radio protocols of the next-generation mobile communication system are composed of NR service data adaptation protocol (SDAP) 4-01 or 4-45, NR PDCP 4-05 or 4-40, NR RLC 4-10 or 4-35, and NR MAC 4-15 or 4-30.

The main functions of the NR SDAP 4-01 or 4-45 may include some of the following functions.
- User data transfer function (transfer of user plane data)
- Mapping function between QoS flows and data bearers for uplink and downlink (mapping between a QoS flow and a DRB (data radio bearer) for both DL and UL)
- QoS flow ID marking function for uplink and downlink (marking QoS flow ID in both DL packets and UL packets)
- Function of mapping reflective QoS flow to data bearer for uplink SDAP PDUs (reflective QoS flow to DRB mapping for the UL SDAP PDUs)

With respect to the SDAP entity, the UE may be configured with, through a radio resource control (RRC) message, whether to use a header of the SDAP entity or whether to use a function of the SDAP entity for each PDCP entity, bearer, or logical channel. If a SDAP header is configured, the SDAP entity may use a NAS (non-access stratum) reflective QoS 1-bit indication and AS (access stratum) reflective QoS 1-bit indication of the SDAP header to instruct the UE to update or reconfigure the mapping information between QoS flows and data bearers for the uplink and downlink. The SDAP header may include QoS flow ID information indicating the QoS. The QoS information may be used as data processing priority and scheduling information for supporting smooth services.

The main function of the NR PDCP 4-05 or 4-40 may include some of the following functions.
- Header compression and decompression function (header compression and decompression: ROHC only)
- User data transfer function (transfer of user data)
- In-sequence delivery function (in-sequence delivery of upper layer PDUs)
- Out-of-sequence delivery function (out-of-sequence delivery of upper layer PDUs)
- Reordering function (PDCP PDU reordering for reception)
- Duplicate detection function (duplicate detection of lower layer SDUs)
- Retransmission function (retransmission of PDCP SDUs)
- Cipher and decipher function (ciphering and deciphering)
- Timer-based SDU discard function (timer-based SDU discard in uplink)

In the above description, the reordering function of the NR PDCP entity may mean reordering of PDCP PDUs received from a lower layer in order based on the PDCP sequence number (SN). The reordering function of the NR PDCP entity may include delivering data to an upper layer in reordered sequence, directly delivering data without considering the order, recording lost PDCP PDUs through reordering, reporting the status of lost PDCP PDUs to the transmitting side, or requesting retransmission of the lost PDCP PDUs.

The main function of the NR RLC 4-10 or 4-35 may include some of the following functions.
- Data transfer function (transfer of upper layer PDUs)
- In-sequence delivery function (in-sequence delivery of upper layer PDUs)
- Out-of-sequence delivery function (out-of-sequence delivery of upper layer PDUs)
- ARQ function (error correction through ARQ)
- Concatenation, segmentation and reassembly function (concatenation, segmentation and reassembly of RLC SDUs)
- Re-segmentation function (re-segmentation of RLC data PDUs)
- Reordering function (reordering of RLC data PDUs)
- Duplicate detection function (duplicate detection)
- Error detection function (protocol error detection)
- RLC SDU discard function (RLC SDU discard)
- RLC re-establishment function (RLC re-establishment)

In the above description, in-sequence delivery of the NR RLC entity may mean in-sequence delivery of RLC SDUs received from a lower layer to an upper layer. In-sequence delivery of the NR RLC entity may include reassembly and delivery of RLC SDUs when several RLC SDUs belonging to one original RLC SDU are received after segmentation.

In-sequence delivery of the NR RLC entity may include reordering of received RLC PDUs based on the RLC sequence number (SN) or the PDCP SN, recording lost RLC PDUs through reordering, reporting the status of the lost RLC PDUs to the transmitting side, and requesting retransmission of the lost RLC PDUs.

If there is a lost RLC SDU, in-sequence delivery of the NR RLC entity may include in-sequence delivery of only RLC SDUs before the lost RLC SDU to an upper layer.

Although there is a lost RLC SDU, if a specified timer has expired, in-sequence delivery of the NR RLC entity may include in-sequence delivery of all the RLC SDUs received before the starting of the timer to an upper layer.

Although there is a lost RLC SDU, if a specified timer has expired, in-sequence delivery of the NR RLC entity may include in-sequence delivery of all the RLC SDUs received up to now to an upper layer.

The NR RLC entity may process RLC PDUs in the order of reception regardless of the order of the sequence number, and transfer them to the NR PDCP entity.

In case of receiving a segment, the NR RLC entity may reconstruct one whole RLC PDU from segments stored in the buffer or received later, and transfer it to the NR PDCP entity.

The NR RLC layer may not include a concatenation function, which may be performed by the NR MAC layer or may be replaced with a multiplexing function of the NR MAC layer.

In the above description, out-of-sequence delivery of the NR RLC entity may mean a function of transferring RLC SDUs received from a lower layer directly to a higher layer regardless of their order. If several RLC SDUs belonging to one original RLC SDU are received after segmentation, out-of-sequence delivery of the NR RLC entity may include reassembly and delivery of the RLC SDUs. Out-of-sequence delivery of the NR RLC entity may include storing the RLC SNs or PDCP SNs of received RLC PDUs and ordering them to record lost RLC PDUs.

The NR MAC 4-15 or 4-30 may be connected to several NR RLC entities configured in one UE, and the main function of the NR MAC 4-15 or 4-30 may include some of the following functions.
- Mapping function (mapping between logical channels and transport channels)
- Multiplexing and demultiplexing function (multiplexing/demultiplexing of MAC SDUs)
- Scheduling information reporting function (scheduling information reporting)
- HARQ function (error correction through HARQ)
- Priority handling function between logical channels (priority handling between logical channels of one UE)
- Priority handling function between UEs (priority handling between UEs by means of dynamic scheduling)
- MBMS service identification function (MBMS service identification)
- Transport format selection function (transport format selection)
- Padding function (padding)

The NR PHY 4-20 or 4-25 may compose OFDM symbols from higher layer data through channel coding and modulation and transmit them through a radio channel, or may demodulate and channel-decode OFDM symbols received through a radio channel and forward the result to a higher layer.

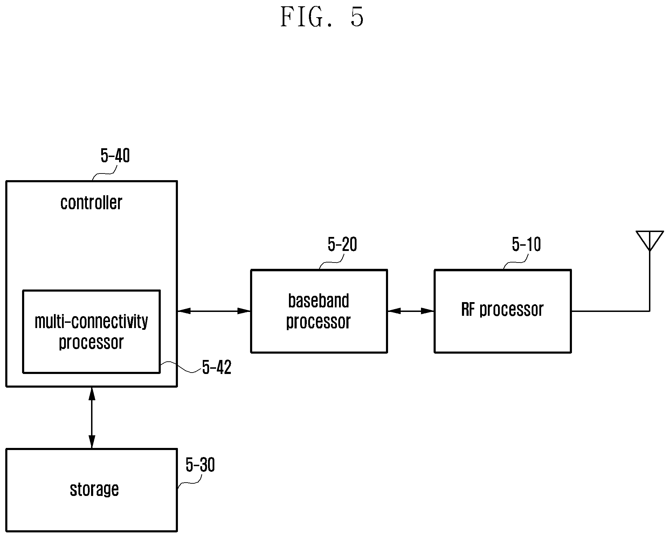

FIG. 5 is a block diagram illustrating the internal structure of a user equipment according to an embodiment of the disclosure.

With reference to the drawing, the UE may include a radio frequency (RF) processor 5-10, a baseband processor 5-20, a storage 5-30, and a controller 5-40. In addition, the controller 5-40 may include a multi-connectivity handler 5-42.

The RF processor 5-10 performs a function for transmitting and receiving a signal through a radio channel, such as signal band conversion and amplification. That is, the RF processor 5-10 performs up-conversion of a baseband signal provided from the baseband processor 5-20 into an RF-band signal and transmits it through an antenna, and performs down-conversion of an RF-band signal received through an antenna into a baseband signal. For example, the RF processor 5-10 may include a transmission filter, a reception filter, an amplifier, a mixer, an oscillator, a digital-to-analog converter (DAC), and an analog-to-digital converter (ADC). Although only one antenna is illustrated in the drawing, the UE may be provided with a plurality of antennas. Also, the RF processor 5-10 may include a plurality of RF chains. Further, the RF processor 5-10 may perform beamforming. For beamforming, the RF processor 5-10 may adjust phases and magnitudes of signals transmitted and received through plural antennas or antenna elements. Further, the RF processor may perform MIMO, and may receive several layers during a MIMO operation.

The baseband processor 5-20 performs conversion between a baseband signal and a bit stream in accordance with the physical layer specification of the system. For example, during data transmission, the baseband processor 5-20 generates complex symbols by encoding and modulating a transmission bit stream. Further, during data reception, the baseband processor 5-20 restores a reception bit stream by demodulating and decoding a baseband signal provided from the RF processor 5-10. For example, in the case of utilizing orthogonal frequency division multiplexing (OFDM), for data transmission, the baseband processor 5-20 generates complex symbols by encoding and modulating a transmission bit stream, maps the complex symbols to subcarriers, and composes OFDM symbols through inverse fast Fourier transform (IFFT) operation and cyclic prefix (CP) insertion. Further, for data reception, the baseband processor 5-20 divides a baseband signal provided from the RF processor 5-10 in units of OFDM symbols, restores the signals mapped to subcarriers through fast Fourier transform (FFT) operation, and reconstructs the reception bit stream through demodulation and decoding.

The baseband processor 5-20 and the RF processor 5-10 transmit and receive signals as described above. Hence, the baseband processor 5-20 and the RF processor 5-10 may be called a transmitter, a receiver, a transceiver, or a communication unit. Further, to support different radio access technologies, at least one of the baseband processor 5-20 or the RF processor 5-10 may include a plurality of communication modules. In addition, to process signals of different frequency bands, at least one of the baseband processor 5-20 or the RF processor 5-10 may include different communication modules. For example, the different radio access technologies may include a wireless LAN (e.g., IEEE 802.11), a cellular network (e.g., LTE), and the like. In addition, the different frequency bands may include a super high frequency (SHF) band (e.g., 2.NRHz, NRhz) and a millimeter wave (mmWave) band (e.g., 60 GHz).

The storage 5-30 stores data such as basic programs, application programs, and configuration information for the operation of the UE. In particular, the storage 5-30 may store information about a second access node that performs wireless communication using a second radio access technology. Also, the storage 5-30 provides stored data in response to a request from the controller 5-40.

The controller 5-40 controls the overall operation of the UE. For example, the controller 5-40 transmits and receives signals through the baseband processor 5-20 and the RF processor 5-10. Further, the controller 5-40 writes or reads data to or from the storage 5-40. To this end, the controller 5-40 may include at least one processor. For example, the controller 5-40 may include a communication processor (CP) for controlling communication and an application processor (AP) for controlling higher layers such as application programs. In addition, the controller 5-40 may control the operation of the UE or a corresponding entity according to various embodiments of the disclosure.

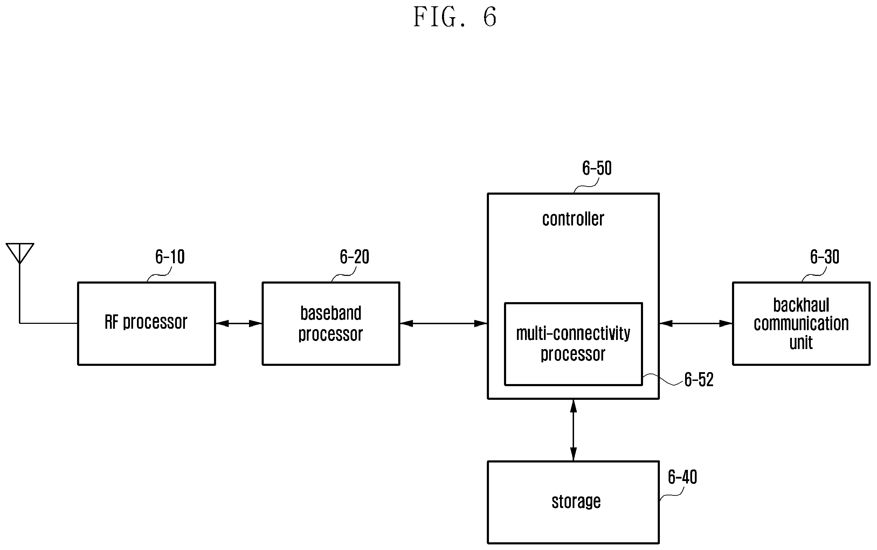

FIG. 6 is a block diagram showing the configuration of a base station according to an embodiment of the disclosure.

As shown in the drawing, the base station may include an RF processor 6-10, a baseband processor 6-20, a backhaul communication unit 6-30, a storage 6-40, and a controller 6-50. In addition, the controller 6-50 may include a multi-connectivity handler 6-52.

The RF processor 6-10 performs a function for transmitting and receiving a signal through a radio channel, such as signal band conversion and amplification. That is, the RF processor 6-10 performs up-conversion of a baseband signal provided from the baseband processor 6-20 into an RF-band signal and transmits the converted signal through an antenna, and performs down-conversion of an RF-band signal received through an antenna into a baseband signal. For example, the RF processor 6-10 may include a transmission filter, a reception filter, an amplifier, a mixer, an oscillator, a DAC, and an ADC. Although only one antenna is illustrated in the drawing, the first access node may be provided with a plurality of antennas. Additionally, the RF processor 6-10 may include a plurality of RF chains. Further, the RF processor 6-10 may perform beamforming. For beamforming, the RF processor 6-10 may adjust phases and amplitudes of signals transmitted and received through plural antennas or antenna elements. The RF processor may perform downlink MIMO operation by transmitting one or more layers.

The baseband processor 6-20 performs conversion between a baseband signal and a bit stream in accordance with the physical layer specification of a first radio access technology. For example, for data transmission, the baseband processor 6-20 generates complex symbols by encoding and modulating a transmission bit stream. Further, for data reception, the baseband processor 6-20 restores a reception bit stream by demodulating and decoding a baseband signal provided from the RF processor 6-10. For example, in the case of utilizing OFDM, for data transmission, the baseband processor 6-20 generates complex symbols by encoding and modulating a transmission bit stream, maps the complex symbols to subcarriers, and composes OFDM symbols through IFFT operation and CP insertion. Further, for data reception, the baseband processor 6-20 divides a baseband signal provided from the RF processor 6-10 in units of OFDM symbols, restores the signals mapped to subcarriers through FFT operation, and reconstructs the reception bit stream through demodulation and decoding. The baseband processor 6-20 and the RF processor 6-10 transmit and receive signals as described above. Hence, the baseband processor 6-20 and the RF processor 6-10 may be called a transmitter, a receiver, a transceiver, a communication unit, or a wireless communication unit.

The backhaul communication unit 6-30 provides an interface for communication with other nodes in the network. That is, the backhaul communication unit 6-30 converts a bit stream, which is to be transmitted from the base station to another node, for example, a secondary base station or the core network, into a physical signal, and converts a physical signal received from another node into a bit stream.

The storage 6-40 stores data such as basic programs, application programs, and configuration information for the operation of the base station. In particular, the storage 6-40 may store information on a bearer allocated to a connected UE and measurement results reported from the connected UE. Further, the storage 6-40 may store information used as a criterion for determining whether to provide or suspend multi-connectivity to the UE. In addition, the storage 6-40 provides stored data in response to a request from the controller 6-50.

The controller 6-50 controls the overall operation of the base station. For example, the controller 6-50 transmits and receives signals through the baseband processor 6-20 and the RF processor 6-10 or through the backhaul communication unit 6-30. Further, the controller 6-50 writes or reads data to or from the storage 6-40. To this end, the controller 6-50 may include at least one processor. In addition, the controller 6-50 may control the operation of the base station or a corresponding entity according to various embodiments of the disclosure.

In various embodiments of the disclosure, the base station may be a master node (MN) and may be referred to as a first base station. Alternatively, the base station may be a master node (SN) and may be referred to as a second base station. For example, the controller 6-50 may be configured to control the transceiver (6-10, 6-20) to transmit a first message for conditional primary secondary cell (PSCell) addition including measurement results of a UE for at least one cell to a second base station managing the at least one cell, control the transceiver (6-10, 6-20) to receive a second message including at least one of frequency information related to a candidate target PSCell selected from among the at least one cell or a cell identifier of the candidate target PSCell and configuration information for the candidate target PSCell from the second base station in response to the first message, determine an execution condition for conditional PSCell addition in relation to the candidate target PSCell based on at least one of the frequency information or the cell identifier, and control the transceiver (6-10, 6-20) to transmit a third message including the configuration information for the candidate target PSCell, information indicating the execution condition, and the **conditional PSCell identifier** to the UE. As another example, the controller 6-50 may be configured to control the transceiver (6-10, 6-20) to receive, from a first base station, a first message for conditional primary secondary cell (PSCell) addition including measurement results of a UE for at least one cell managed by a second base station, and control the transceiver (6-10, 6-20) to transmit, to the first base station, a second message including at least one of frequency information related to a candidate target PSCell selected from among the at least one cell or a cell identifier of the candidate target PSCell and configuration information for the candidate target PSCell in response to the first message. Here, at least one of the frequency information or the cell identifier may be used to determine an execution condition for conditional PSCell addition in relation to the candidate target PSCell, and a third message including the configuration information for the candidate target PSCell, information indicating the execution condition, and the **conditional PSCell identifier** may be transmitted from the first base station to the UE.

Dual connectivity mentioned in various embodiments of the disclosure may include both LTE-NR dual connectivity (ENDC) where the core network is evolved packet core (EPC) and multi-RAT dual connectivity (MRDC) where the core network is 5GC, and includes network and UE operations according to the RAT of the MN and the SN.

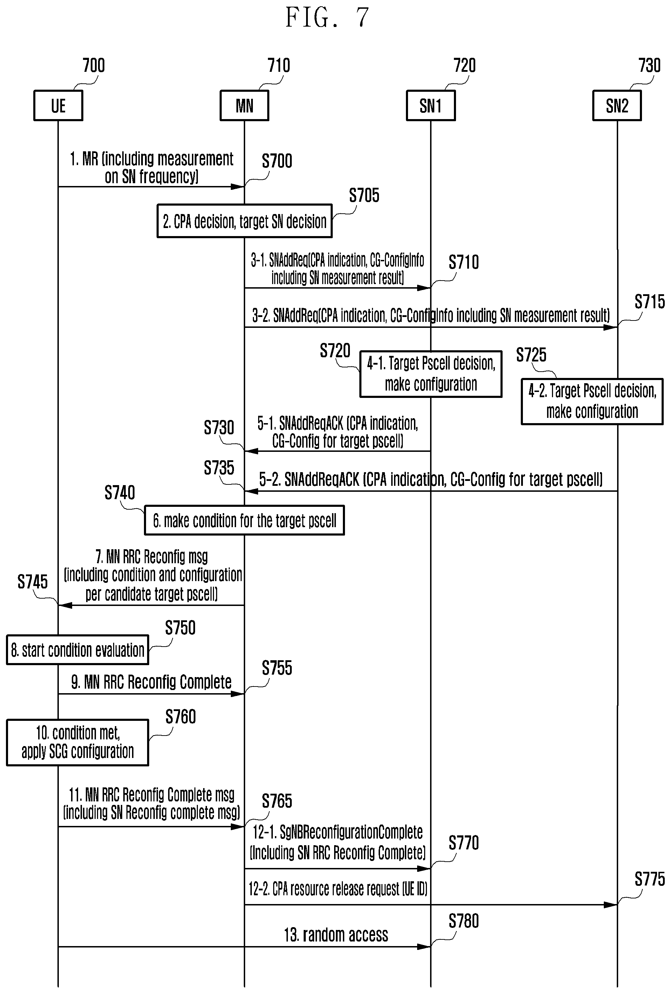

FIG. 7 is a diagram depicting a procedure of conditional primary secondary cell (PSCell) addition initiated by the master node (MN) according to an embodiment of the disclosure.

FIG. 7 is a flow diagram illustrating a process in which the MN configures conditional PSCell addition (CPA) to the UE and the UE performs CPA.

The terminal may be in connected state with the MN. The UE may receive measurement configuration information for frequencies associated with the SN from the MN.

At step S700, for the frequencies associated with the SN according to the measurement configuration information, the UE may perform measurements on the cells residing on the corresponding frequencies, and transmit a measurement report for the corresponding measurement result to the MN according to a preset measurement reporting condition (1). Here, the frequencies associated with the SN may mean frequencies on which cells managed by the SN are located.

After receiving the measurement information of the cells for the frequencies managed by the SN from the UE, at step S705, the MN may determine to configure CPA based on the measurement information and data transmission determined by the MN to be required for the UE. In addition, after determining CPA configuration, the MN may determine a target SN (2). Here, there may be plural target SNs.

After determining the target SN, at steps S710 and S715, the MN transmits a SgNBAdditionRequest (interchangeable with SNAdditionRequest) message including at least one of the following information to the determined SN (3-1, 3-2).
- CPA indication
- CG-ConfigInfo

CPA indication may be information indicating, when the SN receives the message, a CPA which is an SCG setup for a specific US is performed after a certain time. CG-ConfigInfo includes configuration information desired by the MN for SCG setup. For example, frequency bands in which cells managed by the target SN operate and a result value measured by the UE on the cells residing in the frequency bands may be included. The measurement result values may include at least one of a frequency of the absolute radiofrequency channel number (ARFCN) associated with a physical cell identifier (PCI) of the measured cell, a cell measurement value, and/or a result value for beam measurement.

Upon receiving the message, at steps S720 and S725, the target SN may be aware that it is conditional PSCell addition (CPA) based on the CPA indication. Alternatively, the target SN may be aware that it is not an immediate PSCell addition. Also, the SN determines a candidate target PSCell based on the measurement result for each cell and/or each beam given by the MN (4-1, 4-2).

At steps S730 and S735, the target SN allocates resources for the UE to the target PSCell, and transmits SCG configuration information to be applied by the UE back to the MN. The SN may include at least one of the following information in the response message (SgNBAdditionRequestAck (interchangeable with SNAdditionRequestAck) message) (5-1, 5-2).
- CPA indication
- Configuration information of candidate target PSCell
- Information about the frequency on which candidate target PSCell is operating

CPA indication may indicate that the above information received by the MN is SCG configuration information for CPA. The MN may generate CPA configuration for candidate target cells included in the SgNBAdditionRequestACK message including the CPA indication and transmit it to the UE. The target SN may include configuration information of the candidate target PSCell determined by the target SN in an RRC inter-node message called CG-Config and deliver it to the MN. Also, the information about the frequency on which the candidate target PSCell is operating may be an ARFCN value. When the target SN transmits the above information, configuration information and frequency information of each candidate target PSCell may be delivered by being associated respectively.

Upon receiving the SgNBAdditionRequestACK message, at step S740, for the frequency associated with each candidate target PSCell included in the SgNBAdditionRequestACK message, the MN may generate (or determine) an execution condition for CPA based on a measurement object having the corresponding frequency as an ssbFrequency or CSI-RS frequency value (6).

The execution condition for CPA may configure a synchronization signal block (SSB) or a channel state information reference signal (CSI-RS), and may be generated based on the reference signal received power (RSRP), reference signal received quality (RSRQ), or received signal strength indicator (RSSI). In particular, like event A4, when the cell strength of the candidate target PSCell is greater than or equal to a specific threshold, it can be considered that the corresponding event is satisfied. For example, when event A4 is set as an execution condition for CPA, if the measured value (e.g., RSRP, RSRQ, RSSI) of a signal (e.g., SSB or CSI-RS) transmitted through the candidate target PSCell is greater than or equal to a specific threshold, the UE may determine that the execution condition for CPA is satisfied. In the case of a UE configured with E-UTRAN New Radio - dual connectivity (ENDC), if the cell strength of the NR RAT PSCell is greater than or equal to a specific threshold, like event B1, the UE may consider that the corresponding event is satisfied. For example, when event B1 is set as an execution condition for CPA, if the measured value (e.g., RSRP, RSRQ, RSSI) of a signal (e.g., SSB or CSI-RS) transmitted through the candidate target PSCell operating on NR RAT is greater than or equal to a specific threshold, the UE may determine that the execution condition for CPAis satisfied.

In an embodiment, the MN may use a measurement ID formed by a combination of a measurement object corresponding to the frequency value of the candidate target PSCell received from the SN and reportConfiguration created for CPA as one of CPA execution conditions of the candidate target PSCell. Multiple measurement IDs can be used as a CPA condition of one candidate target PSCell; when multiple measIds become a CPA condition, it can be considered that the CPA condition of one candidate target PSCell is satisfied if all the measurement IDs are simultaneously satisfied. Alternatively, when multiple measIds become a CPA condition, it can be considered that the CPA condition of one candidate target PSCell is satisfied if measurements corresponding to a subset of the multiple measIds are satisfied.

In another embodiment, the SN may include at least one of the following information in the SgNBAdditionRequestAck message (5-1, 5-2).
- CPA indication
- Configuration information of candidate target PSCell
- Information about frequency on which candidate target PSCell is operating
- Threshold information of cell strength to be considered in the condition of candidate target PSCell (here, the quantity (e.g., RSRP, RSSQ, RSSI) for which this threshold will be used can be additionally indicated via the SgNBAdditionRequest message previously received from the MN)

In this case, the upper three pieces of information may be used for the operation in the MN described above. Additionally, the threshold information of the cell strength to be considered in the condition of the candidate target PSCell may be used, when the MN receives the threshold information and generates a CPA execution condition for each candidate target PSCell, to finally determine the CPA condition by comparing the threshold value to be used for A4- or B1- based event considered by the MN with the threshold value received from the SN. As an embodiment, when the MN receives the above information via the SgNBAdditionRequestACK message, the MN may compare the threshold value considered by the MN and the threshold value received from the SN to select a larger value among them, and may, as a result, utilize it as a threshold value for event A4 or B1 to be used in the CPA execution condition. In this case, the MN may have to transmit the quantity information to be used for event A4 or B1, that is, which value among RSRP, RSRQ, RSSI values to be used, to the SN in advance via the SgNBAdditionRequest message. Based on these values, the SN can deliver the threshold value required by it back to the MN according to the given quantity information.

In another embodiment, the SN may include at least one of the following information in the SgNBAdditionRequestAck message (5-1, 5-2).
- CPA indication
- Configuration information of candidate target PSCell
- Information about frequency on which candidate target PSCell is operating and/or cell identifier (e.g., used interchangeably with PCI) information of candidate target PSCell
- Threshold information for the cell strength to be considered in the condition of candidate target PSCell
- Offset information to be applied to the corresponding frequency in addition to the threshold value, and/or per-cell offset information (when threshold information is delivered, the quantity (e.g., RSRP, RSSQ, RSSI) for which this threshold will be used can be additionally indicated via the SgNBAdditionRequest message previously received from the MN)

The above information may be transmitted to the MN in an associated form {configuration information, frequency/PCI information, threshold and offset information} for one candidate target PSCell, and information of multiple candidate target PSCells may be delivered to the MN. In addition, the above information may be included in a specific field of an X2/Xn message, or included in a separate RRC container field or a legacy CG-Config field.

In this case, the upper four pieces of information may be used for the operation in the MN described above. Additionally, the threshold information of the cell strength to be considered in the condition of the candidate target PSCell may be used, when the MN receives the threshold information and generates a CPA execution condition for each candidate target PSCell, to finally determine the CPA condition by comparing the threshold value to be used for A4- or B1- based event considered by the MN with the threshold value received from the SN. As an embodiment, when the MN receives the above information via the SgNBAdditionRequestACK message, the MN may compare the threshold value considered by the MN and the threshold value received from the SN to select a larger value among them, and may, as a result, utilize it as a threshold value for event A4 or B1 to be used in the CPA execution condition. In this case, the MN may have to transmit the quantity information to be used for event A4 or B1, that is, which value among RSRP, RSRQ, RSSI values to be used, to the SN in advance via the SgNBAdditionRequest message. Based on these values, the SN can deliver the threshold value required by it back to the MN according to the given quantity information. Further, when generating a condition based on event A4 or B1, the offset value for each frequency and cell may be used as a value added to the corresponding threshold value of the candidate target PSCell for each frequency and each cell. For example, the measured cell strength may be compared with a value given by (threshold value + per-frequency offset + per-cell offset).

When receiving the above information, at step S745, the MN transmits a message (e.g., RRC Reconfiguration) including a CPA execution condition and configuration information for each candidate target PSCell by using the given information. For example, for each candidate target PSCell, configuration ID, CPA execution condition, and configuration information (RRCReconfiguration information) to be used in the corresponding PSCell may be transmitted to the UE in an associated form. Configuration ID may be an integer value determined by the MN to indicate the configuration information and condition of a specific candidate target PSCell. At this time, the MN may transmit the above information by making a list in the RRCReconfiguration message (7).

In another embodiment, if the MN additionally receives a cell identifier of the candidate target PSCell at step S735, at step S745, the MN may transmit a message (e.g., RRC Reconfiguration) including, for each candidate target PSCell, a CPA execution condition for the candidate target PSCell, configuration information of the candidate target PSCell, and the cell identifier of the candidate target PSCell by using the given information. For example, the MN may transmit, for each candidate target PSCell, configuration ID, CPA execution condition, configuration information (RRCReconfiguration information generated by the SN) to be used in the corresponding PSCell, and cell identifier of the candidate target PSCell to the UE in an associated form. Further, configuration ID may be an integer value determined by the MN to indicate the configuration information and condition of a specific candidate target PSCell. At this time, the MN may transmit the above information by making a list in the RRCReconfiguration message (7).

Upon receiving the above message, at step S750, the UE may perform measurement for condition evaluation corresponding to a measurement ID indicating each CPA execution condition (8).

In another embodiment, if the MN additionally receives a cell identifier of the candidate target PSCell at step S735, at step S750, when the UE receiving the above message performs measurement for condition evaluation corresponding to a measurement ID indicating each CPA execution condition, it may perform condition evaluation on a cell that resides on the frequency of the measurement obj ect corresponding to the measurement ID and is identified by the cell identifier (8).

At step S755, the UE may transmit a response message indicating that it has received the message of (7) (MN RRCReconfiguration) to the MN (9). For example, an RRC Reconfiguration complete message may be transmitted.

At step S760, if the CPA execution condition for a specific candidate target PSCell is satisfied at a specific time, the UE may apply configuration information of the corresponding PSCell (10). This configuration information may be configuration information for SCG setup or SCG addition.

After applying the configuration information, at step S765, the UE may notify the MN of performing CPA by using a message such as MN RRCReconfigurationComplete message or ULInformationTransfer. Here, to indicate the target PSCell for performing CPA via the message, the UE may transmit the message including a configuration ID (config ID) corresponding to the target PSCell among config IDs included in the MN RRCReconfiguration message. In addition, for the MN to deliver the SN RRC reconfiguration complete message to the SN managing the target PSCell for CPA, the SN RRC Reconfiguration complete message may be transmitted by being included in the MN RRCReconfigurationComplete message or the ULInformationTransfer message (11). In this case, the SN RRC Reconfiguration complete message may be transmitted as an octet string value.

When the MN receives MN RRCReconfigurationComplete, the MN may identify the target SN based on the config ID associated with the target PSCell included therein. Thereby, when the SN RRCReconfigurationComplete message received in (11) is delivered to the target SN by using an Xn message, the target SN may be aware that the UE performs SCG (PSCell) addition. In FIG. 7, the target SN is assumed to be SN 1, but the target SN may be another SN (e.g., SN 2 in FIG. 7).

At step S770, to notify the target SN of CPA of the UE and to include the SN RRCReconfigurationComplete message, the MN may use an SgNBRRCReconfigurationComplete message which is an Xn/X2 message (12-1). For example, an SgNBRRCReconfigurationComplete message including an SN RRCReconfigurationComplete message may be transmitted to the target SN.

At step S775, the MN may request an SN (SN2 in FIG. 7) other than the target SN to release resources of cells to which resources are allocated for CPA. For this purpose, an Xn/X2 message (referred to as, for example, a CPA release message without being limited thereto) may be transmitted. This message may include M-NG-RAN node UE XnAP ID information. The SN having received this message may cancel or release all cells selected as CPA candidate PSCells for the corresponding UE and resources allocated for those cells. In another embodiment, the corresponding message may include information on a cell whose resources are to be released. In another embodiment, the message of (12-2) may be delivered by the MN to SN2 only when the UE has successfully performed CPA. To this end, before transmitting the message of (12-2), the UE may perform random access at step S780 (13); if random access is successful, the target SN (i.e. SN1 in FIG. 7) may recognize a CPA success and deliver a message indicating successful CPA to the MN. Upon receiving this message, the MN may transmit a CPA resource release request message to those SNs managing the remaining CPA candidate target PSCells.

According to an embodiment, when the SN transmits an SNAddRequestACK message to the MN, the TX_nDC_{ overall} timer may be started only if there is no CPA indication.

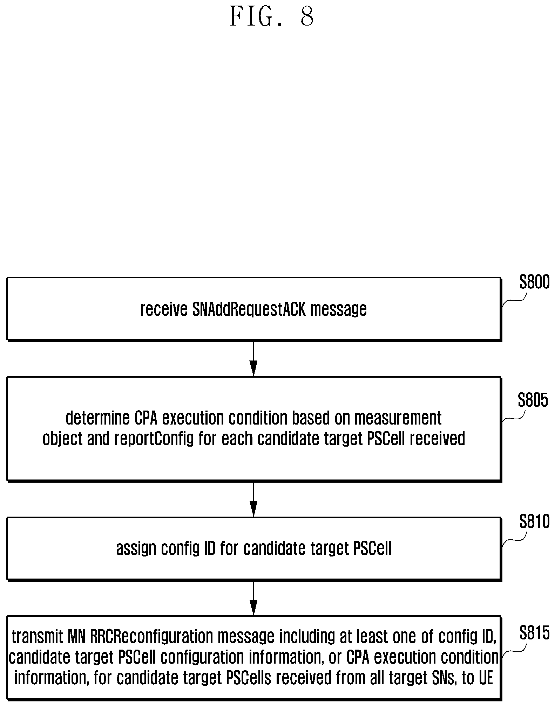

FIG. 8 is a flowchart illustrating operations performed by the MN when the SN does not transmit an additional threshold value for CPA condition information to the MN according to an embodiment of the disclosure.

FIG. 8 illustrates a detailed process in which the MN transmits CPA configuration information to the UE. According to an embodiment, FIG. 8 shows a case where the SN does not transmit an additional threshold for CPA condition information to the MN.

At step S800, the MN may receive a SNAddRequestACK message.

In an embodiment, the SNAddRequestACK message may include at least one of CPA indication, configuration information of a candidate target PSCell, or frequency information of the candidate target PSCell.

At step S805, the MN may determine a CPA execution condition for each candidate target PSCell received. Here, for the measurement object (measObject), the one corresponding to the frequency where this candidate target PSCell resides may be selected, and the threshold determined by the MN for event A4 or B1 may be used in reportConfig. For example, the measurement object configuration information (measObject) may include frequency information on which the candidate target PSCell operates, and measurement result reporting configuration information (reportConfig) may include event A4 or B1 and threshold value information determined by the MN. One measurement ID or plural measurement IDs created by a pair of measObject and reportConfig can constitute one CPA execution condition. For example, one or more measurement IDs are associated respectively with measObject and reportConfig, and the UE may identify the CPA execution condition through measObject and reportConfig associated with each measurement ID.

At step S810, the MN may assign a config ID for the candidate target PSCell.

Here, the MN may associate the candidate target PSCell configuration information and CPA execution condition information to the config ID.

At step S815, the MN may transmit a MN RRCReconfiguration message including at least one of config ID, candidate target PSCell configuration information, or CPA execution condition information, for candidate target PSCells received from all target SNs, to the UE.

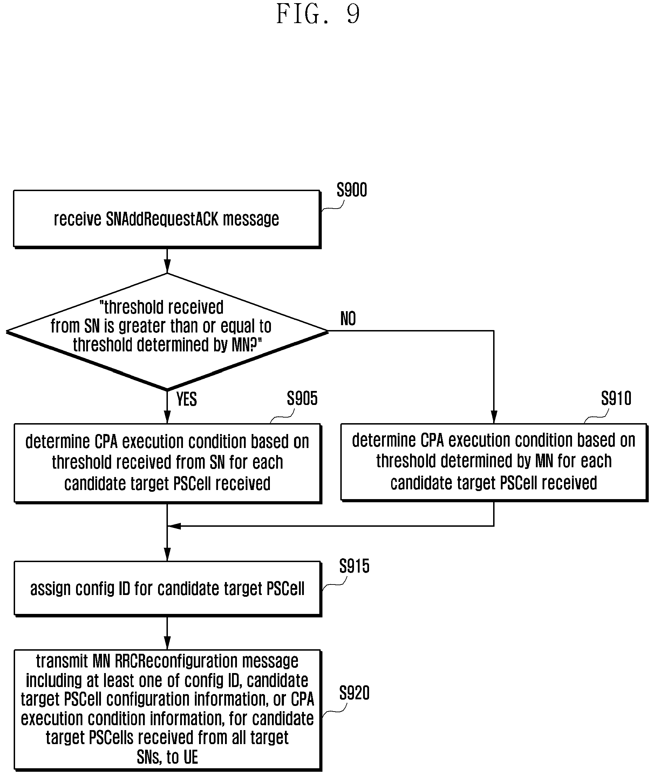

FIG. 9 is a flowchart illustrating operations performed by the MN when the SN transmits an additional threshold value for CPA condition information to the MN according to an embodiment of the disclosure.

FIG. 9 illustrates a detailed process in which the MN transmits CPA configuration information to the UE. According to an embodiment, FIG. 8 shows a case where the SN transmits an additional threshold for CPA condition information to the MN.

At step S900, the MN may receive a SNAddRequestACK message.

In an embodiment, the SNAddRequestACK message may include at least one of CPA indication, configuration information of a candidate target PSCell, or frequency information of the candidate target PSCell. Additionally, threshold value information for event A4 or B1 to be used for the CPA execution condition may also be included. In another embodiment, the SNAddRequestACK message may include at least one of CPA indication, configuration information of a candidate target PSCell, or frequency information of the candidate target PSCell. Additionally, threshold value information for event A4 or B1 to be used for the CPA execution condition and offset information for each cell/frequency may also be included.

At step S905 or S910, the MN may determine a CPA execution condition for each candidate target PSCell received. Here, if the threshold received from the SN is greater than or equal to the threshold determined by the MN, at step S905, as a CPA execution condition for the corresponding candidate target PSCell, the MN may select the one corresponding to the frequency where the candidate target PSCell resides for the measurement object and may use the threshold determined by the SN for the event corresponding to event A4 or B1 in reportConfig. One measurement ID created by a pair of measObject and reportConfig or/and plural measurement IDs created by associations between one measObject and different reportConfigs can constitute one CPA execution condition. If the threshold received from the SN is less than the threshold determined by the MN, at step S910, the MN may utilize the threshold determined by the MN in reportConfig.

At step S915, the MN may assign a config ID for the candidate target PSCell.

The MN may associate the candidate target PSCell configuration information and CPA execution condition information to the config ID.

At step S920, the MN may transmit a MN RRCReconfiguration message including at least one of config ID, candidate target PSCell configuration information, or CPA execution condition information, for candidate target PSCells received from all target SNs, to the UE.

As another embodiment of the disclosure, other information can be exchanged for the SNAddRequest message and the SNAddRequestACK message in FIG. 7. The following methods are possible. It may also be possible to utilize some or combinations thereof.

Method 1) Without PSCell frequency information determined by the SN in the SNAddRequestACK message, the MN may decode CG-Config information of an octet string included in the SNAddRequestACK message to directly extract the frequency of the target PSCell. The MN can use the decoded information to find a measurement object to be used for the CPA execution condition to be transmitted to the UE.

Method 2) When the MN transmits information about a frequency managed by the SN and the cell strength information measured by the UE on the cells residing on this frequency to the SN via the SNAddRequest message, the MN may assign a specific ID to each cell, associate the IDs with cells of the cell strength information, and transmit the SNAddRequest message including the associations to the SN. Upon receiving the SNAddRequest message, the SN may associate the ID of the candidate target PSCell selected by the SN with the configuration information of the candidate target PSCell, and transmit the SNAddRequestACK message including the association back to the MN. Based on the included ID, the MN can identify the frequency information of the corresponding cell and create a CPA condition of the corresponding PSCell.

Method 3) When the MN transmits information about the frequency managed by the SN and the cell strength information measured by the UE on the cells residing on this frequency to the SN via the SNAddRequest message, the MN may transmit the SNAddRequest message containing information on only one cell to the SN. The SN may determine whether to accept this cell as a candidate target PSCell and transmit an ACK or NACK message to the MN. When the ACK message is delivered to the MN, as the MN is already aware of information about the corresponding single cell, the MN may utilize a measurement object including the frequency of the corresponding cell based on this information as part of the CPA execution condition information.

Meanwhile, next, according to another embodiment of the disclosure, when CPA is configured in the UE and other operations (e.g., CHO) are additionally configured in the UE, an operation method of the UE is presented.

According to an embodiment of the disclosure, it can be assumed that conditional handover (CHO) and CPA are both configured in the UE. In this case, the UE may determine (or evaluate) whether execution conditions of CHO and CPA are satisfied at the same time, and may prioritize CHO over CPA in operation execution according to a specified rule. The following methods may be used to prioritize CHO in execution. However, it is not limited thereto.

Method 1) Even if CPA is in progress, evaluation of the CHO execution condition is continued, and both the CHO configuration and the CPA configuration are removed when CHO is completed.

Method 2) When CPA is completed, the CHO configuration is not removed and the CPA configuration is removed.

Method 3) According to the type of conditional reconfiguration, evaluation/execution/release are differentially performed.

According to an embodiment of the disclosure, if at least one condition for CHO execution is satisfied while CPA is being performed, the UE may suspend the CPA in progress and perform CHO. Here, the UE may re-apply (fallback) the RRC configuration values prior to receiving the RRC message (e.g., RRCReconfiguration message) applied to perform CPA. For example, the SCG may be not setup yet. In this state, the target PCell configuration of the CHO determined to be executed due to satisfaction of the CHO execution condition can be applied.

Also, according to an embodiment of the disclosure, the CPA in progress may be completed, and then the CHO configuration may be applied.

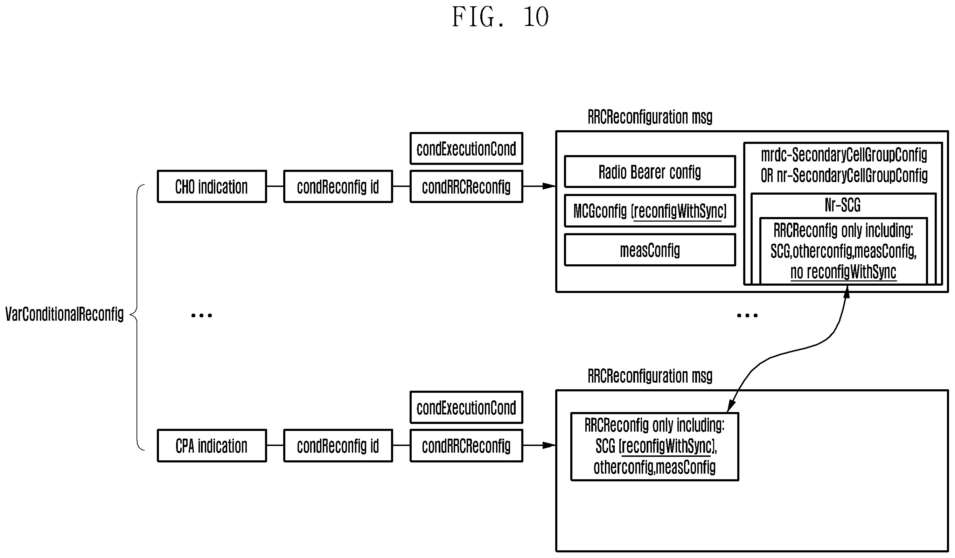

FIG. 10 is a diagram illustrating a scheme for the UE to store information related to CHO and CPA when CHO and CPA are simultaneously configured in the UE according to an embodiment of the disclosure.

The UE may store information for conditional handover (CHO) and information for conditional PSCell addition (CPA) together in a variable (e.g., VarConditionalReconfig) for maintaining CHO operation. In this case, an indicator for distinguishing the information for CHO and the information for CPA may be included.

With reference to FIG. 10, a configuration ID for CHO (e.g., condReconfig ID) and a configuration ID for CPA (e.g., condReconfig ID) can be set in association with indicators that distinguish whether they are for CHO or CPA (e.g., CHO indication, CPA indication, respectively). In addition, each configuration ID (e.g., condReconfig ID) may be set in association with condition information suitable for each case (e.g., condExecutionCond) and target cell configuration information (e.g., condRRCReconfig). When receiving an RRC message (e.g., RRCReconfiguration message) from the network, the UE may use the indicator set in association with a configuration ID (e.g., condReconfig ID) included in the configuration information (e.g., conditionalReconfiguration IE) to distinguish whether the configuration is for CHO or CPA.

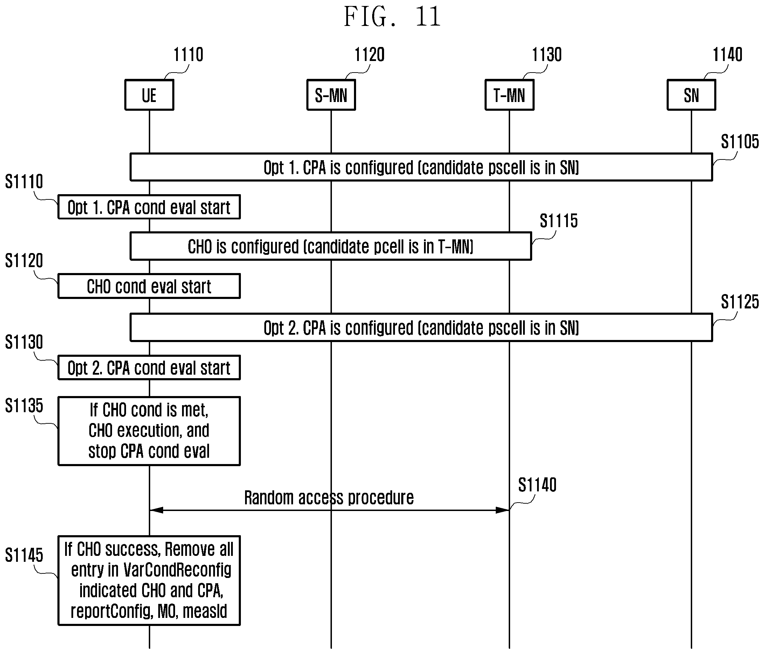

FIG. 11 is a sequence diagram illustrating a method of performing CPA operation when CHO is successfully performed according to an embodiment of the disclosure.

At step S1105, the UE 1110 may receive CPA configuration information from the source master node (S-MN) 1120 based on the secondary node (SN) 1140 where a candidate target PSCell resides.

At step S1110, the UE 1110 may start to evaluate whether the CPA execution condition is satisfied from the point in time when CPA is configured.

At step S1115, the UE 1110 may be configured with CHO by the S-MN 1120 based on the target master node (T-MN) 1140 where a candidate target PCell resides.

At step S1120, the UE 1110 may start to evaluate whether the CHO execution condition is satisfied from the point in time when CHO is configured.

Alternatively, according to an embodiment of the disclosure, the UE 1110 may be configured first with CHO, and then configured with CPA based on the SN where a candidate target PSCell resides. For example, the UE 1110 may be configured with CPA by the S-MN 1120 based on the SN 1140 where a candidate target PSCell resides at step S1125, and may start to evaluate whether the CPA execution condition is satisfied from the point in time when CPA is configured at step S1130.

If the CHO execution condition is satisfied, at step S1135, the UE 1110 may perform CHO to the target PCell and stop evaluation of the CPA execution condition. The target PCell may be a PCell served by the T-MN 1130.

At step S1140, the UE 1110 and the T-MN 1130 may perform CHO to the target PCell (or, may perform a random access procedure to the target PCell).

When CHO to the target PCell is successfully performed (or, when random access to the target PCell is successfully performed), at step S1145, the UE 1110 may remove (release) all configurations classified into CHO and CPA present as entries in the variable (e.g., VarCondReconfig). Here, the variable may mean an internal storage of the UE that stores information on specific configuration parameters received from the network. Among them, the configuration information of CPA and CHO may be separately stored in a single variable called VarCondReconfig. Further, the UE 1110 may remove (release) information (e.g., reportConfig, measurement object, measId) in association with the execution condition among the configurations classified into CHO and CPA from the variable.

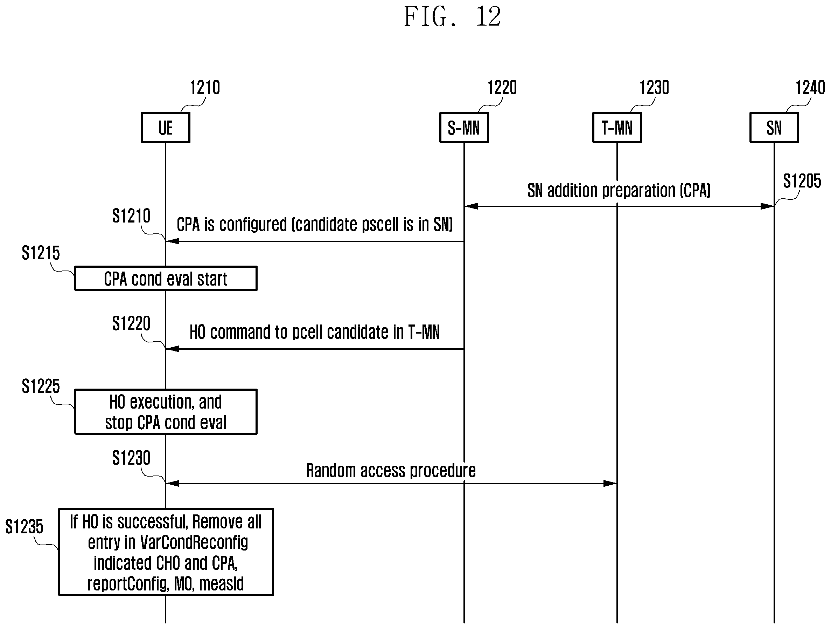

FIG. 12 is a sequence diagram illustrating a method of performing CPA operation when normal handover is successfully performed according to an embodiment of the disclosure.

At step S1205, the source master node (S-MN) 1220 and the secondary node (SN) 1240 may perform a SN addition preparation procedure for CPA.

At step S1210, the UE 1210 may receive CPA configuration information from the S-MN 1220 based on the SN 1240 where a candidate target PSCell resides.

At step S1215, the UE 1210 may start to evaluate whether the CPA execution condition is satisfied from the point in time when CPA is configured.

At step S1220, the UE 1210 may receive, from the S-MN 1220, a message commanding handover (HO) to at least one PCell among candidate PCells of the target master node (T-MN).

If the UE 1210 receives the handover command message from the S-MN 1220 while performing the evaluation, at step S1225, the UE 1210 may perform handover to the PCell of the T-MN 1230 and stop evaluation of the CPA execution condition.

At step S1230, the UE 1210 and the T-MN 1230 may perform a handover procedure to the target PCell (or, may perform a random access procedure to the target PCell).

When handover to the target PCell is successfully performed (or, when random access to the target PCell is successfully performed), at step S1235, the UE 1210 may remove all settings classified into CHO and CPA present as entries in the variable (e.g., VarCondReconfig). Here, the variable may mean an internal storage of the UE that stores information on specific configuration parameters received from the network. Among them, the configuration information of CPA and CHO may be separately stored in a single variable called VarCondReconfig. Further, the UE 1210 may remove information set in association with the execution condition (e.g., reportConfig, measurement object, measId) among the settings classified into CHO and CPA from the variable.

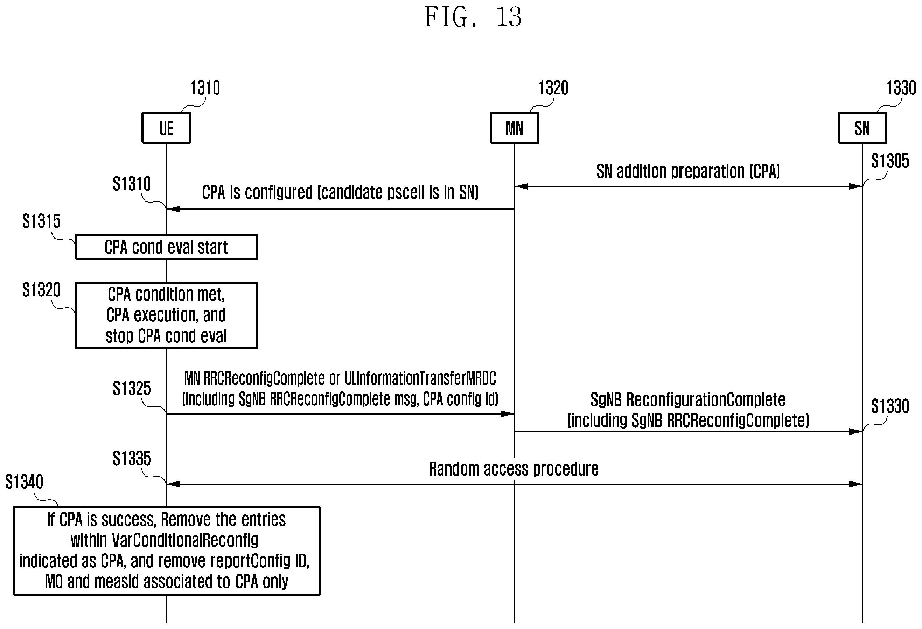

FIG. 13 is a sequence diagram illustrating a method of performing CPA operation according to an embodiment of the disclosure.

At step S1305, the master node (MN) 1320 and the secondary node (SN) 1330 may perform a SN addition preparation procedure for CPA. At step S1310, the UE 1310 may receive CPA configuration information from the MN 1320 based on the SN 1330 where a candidate target PSCell resides.

At step S1315, the UE 1310 may start to evaluate whether the CPA execution condition is satisfied from the point in time when CPA is configured.

If at least one CPA execution condition is satisfied while the UE 1310 is performing the evaluation, at step S1320, the UE 1310 may perform CPA on the candidate target PSCell configured in association with the corresponding condition. Also, evaluation of the CPA execution condition may be stopped.

In the case of performing CPA, at step S1325, the UE 1310 may execute an operation for target PSCell addition. The target PSCell addition operation may include a random access procedure. When the target PSCell addition operation is performed, the UE 1310 may transmit an RRC message for the MN 1320 (e.g., MN RRCReconfigurationComplete message or ULInformationTransferMRDC message) to the MN 1320. The RRC message for the MN 1320 may include an RRC message for the SN 1330 (e.g., SgNB Reconfiguration Complete message or SN RRCReconfigurationComplete message). In addition, when CPA is performed, a CPA configuration ID (e.g., CPA config ID) set in association with the configuration information of the target PSCell performed may be included. However, the RRC message does not have to include all of the above information or messages, and some of them may be omitted and other information or messages may be added.

Upon receiving the RRC message for the MN 1320, at step S1330, the MN 1320 may transmit an Xn message (e.g., SgNB Reconfiguration Complete message or SNReconfigurationComplete message) to the SN 1330 including the target PSCell. The Xn message may include an RRC message for the SN 1330 (e.g., SgNB Reconfiguration Complete message or SN RRCReconfigurationComplete message) received from the UE 1310.

At step S1335, the UE 1310 and the SN 1330 may perform a CPA procedure (or, may perform a random access procedure to the target PSCell).

When CPA is successfully performed (or, when random access to the target PSCell is successfully performed), at step S1340, the UE 1310 may remove all settings classified into CPA present as entries in the variable (e.g., VarCondReconfig). Here, the variable may mean an internal storage of the UE that stores information on specific configuration parameters received from the network. Among them, the configuration information of CPA and CHO may be separately stored in a single variable called VarCondReconfig. Further, the UE 1310 may remove information set in association only with the CPA execution condition (e.g., reportConfig, measurement object, measId) among the settings classified into CPA from the variable.

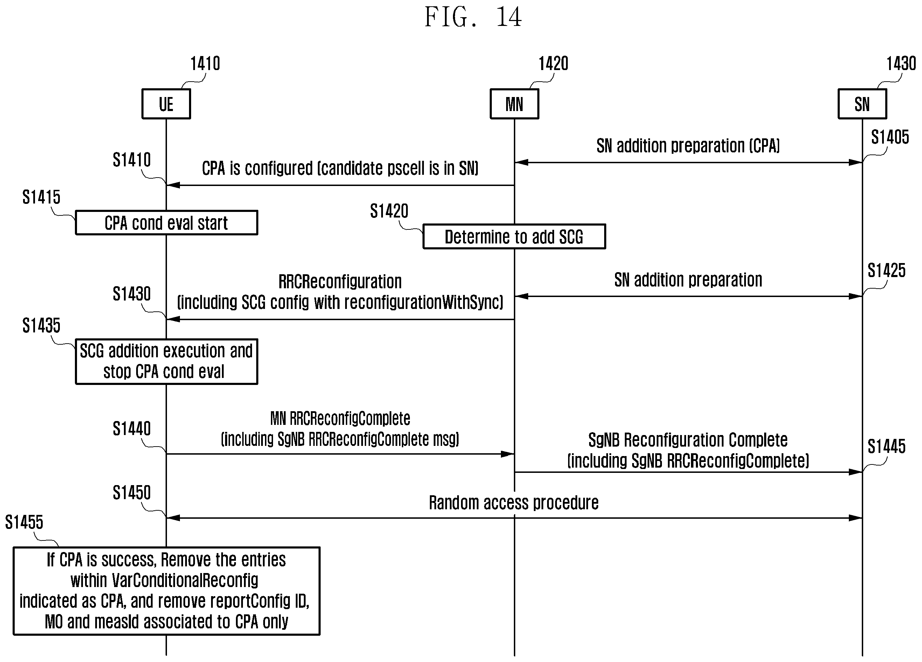

FIG. 14 is a sequence diagram illustrating a method of performing CPA operation when normal PSCell addition or SCG addition is performed according to an embodiment of the disclosure.

At step S1405, the master node (MN) 1420 and the secondary node (SN) 1430 may perform a SN addition preparation procedure for CPA.

At step S1410, the UE 1410 may receive CPA configuration information from the MN 1420 based on the SN 1430 where a candidate target PSCell resides.

At step S1415, the UE 1410 may start to evaluate whether the CPA execution condition is satisfied from the point in time when CPA is configured.

At step S1420, the MN 1420 may determine to perform secondary cell group (SCG) addition (or, PSCell addition).

At step S1425, the MN 1420 and the SN 1430 may perform an SN addition preparation procedure.

At step S1430, the UE 1410 may receive configuration information for SCG addition (or, PSCell addition) from the MN 1420. The configuration information for SCG addition (or, PSCell addition) may be an SCG configuration including reconfigurationWithSync IE in an RRCReconfiguration message.

When the UE 1410 receives configuration information for SCG addition (or, SCG configuration including reconfigurationWithSync IE in the RRCReconfiguration message) from the MN 1420 while performing the evaluation, at step S1435, the UE 1410 may perform a SCG addition procedure based on the configuration information for SCG addition. Also, at this time, evaluation of the CPA execution condition may be stopped. According to an embodiment, SCG addition may also be referred to as PSCell addition. Hence, when receiving configuration information for SCG addition or configuration information for PSCell addition, the UE 1410 may perform a SCG addition procedure or a PSCell addition procedure based on the corresponding configuration information. Likewise, at this time, evaluation of the CPA execution condition may be stopped.

When performing the SCG addition procedure, at step S1440, the UE 1410 may perform an operation for target PSCell addition. The operation of target PSCell addition may include a random access procedure. When performing the target PSCell addition operation, the UE 1410 may transmit an RRC message for the MN 1420 (e.g., MN RRCReconfigurationComplete message) to the MN 1420. The RRC message for the MN 1420 may include an RRC message for the SN 1430 (e.g., SgNB Reconfiguration Complete message or SN RRCReconfigurationComplete message).

Upon receiving the RRC message for the MN 1420, at step S1445, the MN 1420 may transmit an Xn message (e.g., SgNB Reconfiguration Complete message or SNReconfigurationComplete message) to the SN 1430 including the target PSCell. The Xn message may include the RRC message for the SN 1430 (e.g., SgNB Reconfiguration Complete message or SN RRCReconfigurationComplete message) received from the UE 1410.

At step S1450, the UE 1410 and the SN 1430 may perform a SCG addition procedure or PSCell addition procedure (or, may perform a random access procedure to the target PSCell).

When the SCG addition or PSCell addition procedure is successfully performed (or, when random access to the target PSCell is successfully performed), at step S1455, the UE 1410 may remove all settings classified into CPA present as entries in the variable (e.g., VarCondReconfig). Here, the variable may mean an internal storage of the UE that stores information on specific configuration parameters received from the network. Among them, the configuration information of CPA and CHO may be separately stored in a single variable called VarCondReconfig. Further, the UE 1410 may remove information set in association only with the CPA execution condition (e.g., reportConfig, measurement object, measId) among the settings classified into CPA from the variable.

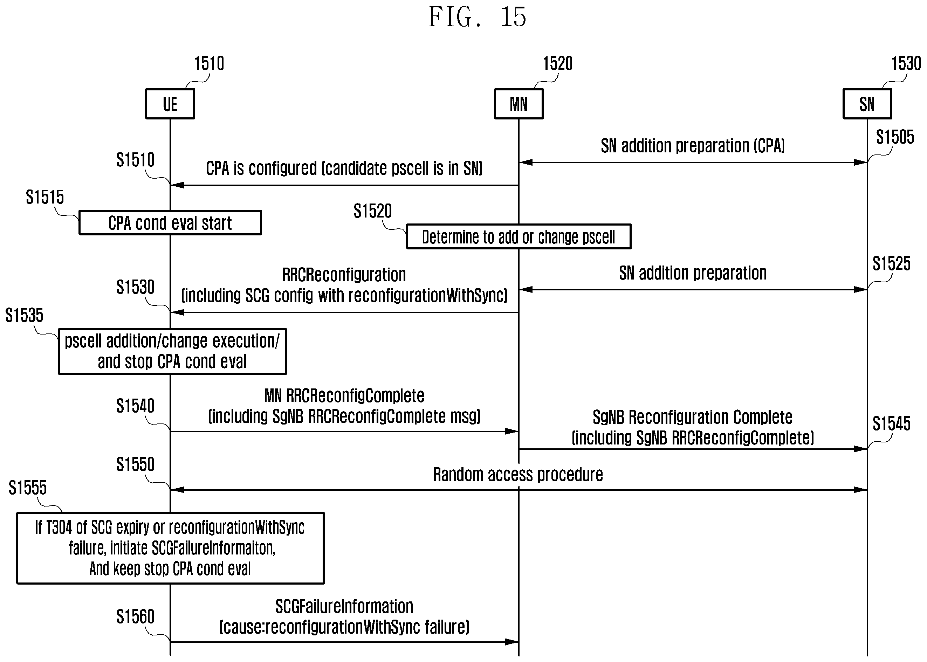

FIG. 15 is a sequence diagram illustrating a method of performing CPA operation when a procedure for SCG addition (or PSCell addition) or PSCell change fails in the middle according to an embodiment of the disclosure.

At step S1505, the master node (MN) 1520 and the secondary node (SN) 1530 may perform a SN addition preparation procedure for CPA.

At step S1510, the UE 1510 may receive CPA configuration information from the MN 1520 based on the SN 1530 where a candidate target PSCell resides.

At step S1515, the UE 1510 may start to evaluate whether the CPA execution condition is satisfied from the point in time when CPA is configured.

At step S1520, the MN 1520 may determine to perform secondary cell group (SCG) addition (or, PSCell addition) or PSCell change.

At step S1525, the MN 1520 and the SN 1530 may perform an SN addition preparation procedure.

At step S1530, the UE 1510 may receive configuration information for SCG addition (or, PSCell addition) or PSCell change from the MN 1520. The configuration information for SCG addition (or, PSCell addition) or PSCell change may be an SCG configuration including reconfigurationWithSync IE in an RRCReconfiguration message.

When the UE 1510 receives configuration information for SCG addition or PSCell change (or, SCG configuration including reconfiguration WithSync IE in the RRCReconfiguration message) from the MN 1520 while performing the evaluation, at step S1535, the UE 1510 may perform SCG addition or PSCell change based on the configuration information for SCG addition or PSCell change. Also, at this time, evaluation of the CPA execution condition may be stopped. According to an embodiment, SCG addition may also be referred to as PSCell addition. Hence, when receiving configuration information for SCG addition (or, configuration information for PSCell addition) or configuration information for PSCell change, the UE 1510 may perform a SCG addition (or PSCell addition) procedure or a PSCell change procedure based on the corresponding configuration information. Likewise, at this time, evaluation of the CPA execution condition may be stopped.

At step S1540, the UE 1510 may perform a SCG addition (orPSCell addition) procedure or a PSCell change procedure. The SCG addition (or PSCell addition) procedure or PSCell change procedure may include a random access procedure. When performing the SCG addition (or PSCell addition) procedure or PSCell change procedure, the UE 1510 may transmit an RRC message for the MN 1520 (e.g., MN RRCReconfigurationComplete message) to the MN 1520. The RRC message for the MN 1520 may include an RRC message for the SN 1530 (e.g., SgNB Reconfiguration Complete message or SN RRCReconfigurationComplete message).

Upon receiving the RRC message for the MN 1520, at step S1545, the MN 1520 may transmit an Xn message (e.g., SgNB Reconfiguration Complete message or SNReconfigurationComplete message) to the SN 1530 including the target PSCell. The Xn message may include the RRC message for the SN 1530 (e.g., SgNB Reconfiguration Complete message or SN RRCReconfigurationComplete message) received from the UE 1510.

At step S1550, the UE 1510 and the SN 1530 may perform a SCG addition (or PSCell addition) procedure or a PSCell change procedure (or, may perform a random access procedure to the target PSCell).

At step S1555, the UE 1510 may determine that the procedure for SCG addition (or PSCell addition) or PSCell change has failed in the middle based on preset criteria. In this case, the UE may sustain stoppage of the CPA condition evaluation while performing a SCGFailureInformaiton procedure. The criteria (or, failure causes) for determining that the procedure for SCG addition (or PSCell addition) or PSCell change has failed in the middle may be as follows. However, these are only illustrative and are not limited thereto.
- A timer for SCG (e.g., T304) expires while the procedure for SCG addition (or PSCell addition) or PSCell change is being performed,
- Or, the content of a received RRC message for the MN 1520 (e.g., MN RRCReconfiguration message) is not compliant,
- Or, reconfiguration With Sync failure occurs during PSCell change.

At step S1560, the UE 1510 may transmit an RRC message (e.g., SCGFailureInformation message) including a failure cause to the MN 1520. Here, the failure cause may be included as a cause value.

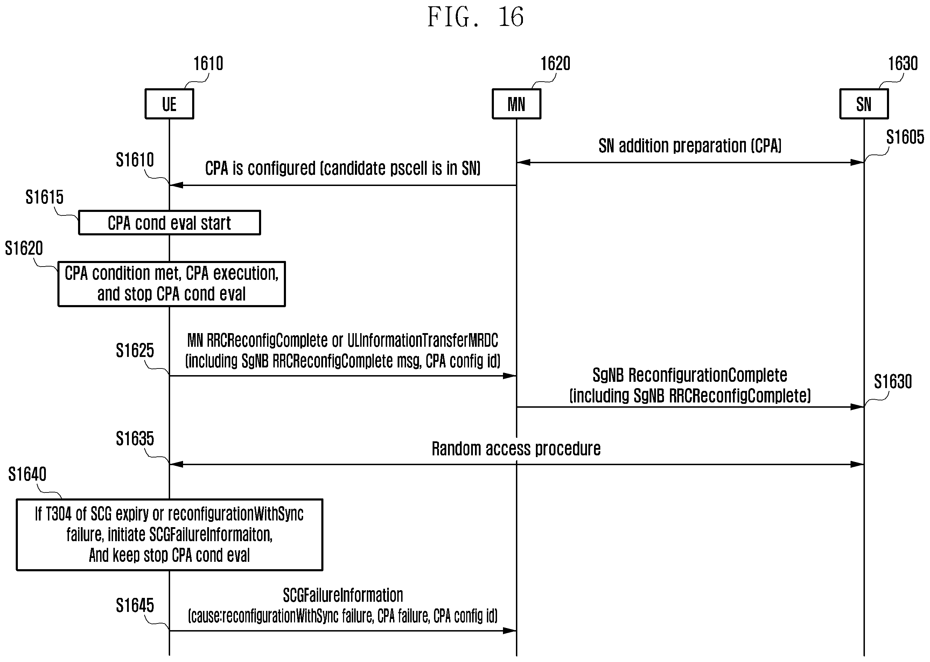

FIG. 16 is a sequence diagram illustrating a method of performing CPA operation when a CPA procedure fails in the middle according to an embodiment of the disclosure.

At step S1605, the master node (MN) 1620 and the secondary node (SN) 1630 may perform a SN addition preparation procedure for CPA.

At step S1610, the UE 1610 may receive CPA configuration information from the MN 1620 based on the SN 1630 where a candidate target PSCell resides.

At step S1615, the UE 1610 may start to evaluate whether the CPA execution condition is satisfied from the point in time when CPA is configured.

If a specific CPA execution condition is satisfied while the UE 1610 is performing the evaluation, at step S1620, the UE 1610 may perform CPA. For example, a procedure for SCG addition (or PSCell addition) may be performed to a candidate target PSCell associated with the corresponding condition. Also, at this time, evaluation of the CPA execution condition may be stopped.

When performing CPA, at step S1625, the UE 1610 may perform an SCG addition (or PSCell addition) procedure to the candidate target PSCell associated with the corresponding condition. The CPA operation may include a random access procedure. When CPA is performed, the UE 1610 may transmit an RRC message for MN 1620 (e.g., MN RRCReconfigurationComplete message or ULInformationTransferMRDC message) to the MN 1620. The RRC message for the MN 1620 may include an RRC message for the SN 1630 (e.g., SgNB Reconfiguration Complete message or SN RRCReconfigurationComplete message). In addition, it may include a CPA configuration ID (e.g., CPA config ID) set in association with the configuration information of the target PSCell having performed CPA. However, the RRC message does not have to include all of the above information or messages, and some of them may be omitted and other information or messages may be added.

Upon receiving the RRC message for the MN 1620, at step S1630, the MN 1620 may transmit an Xn message (e.g., SgNB Reconfiguration Complete message or SNReconfigurationComplete message) to the SN 1630 including the target PSCell. The Xn message may include an RRC message for the SN 1630 (e.g., SgNB Reconfiguration Complete message or SN RRCReconfigurationComplete message) received from the UE 1610.

At step S1635, the UE 1610 and the SN 1630 may perform a CPA procedure (or, may perform a random access procedure to the target PSCell).

At step S1640, the UE 1610 may determine that the CPA procedure has failed in the middle based on the preset criteria. In this case, the UE may sustain stoppage of the CPA condition evaluation while performing a SCGFailureInformaiton procedure. The criteria (or, failure causes) for determining that the CPA procedure has failed in the middle may be as follows. However, these are only illustrative and are not limited thereto.
- A timer for SCG (e.g., T304) expires while the CPA procedure is being performed,
- Or, the content of a received RRC message for the MN 1620 (e.g., RRCReconfiguration message) is not compliant,
- Or, reconfiguration With Sync failure occurs during PSCell addition.

At step S1645, the UE 1610 may transmit an RRC message (e.g., SCGFailureInformation message) including a failure cause to the MN 1620. Here, the failure cause may be included as a cause value. Additionally, information (or, an indicator) indicating that a failure has occurred during the CPA procedure may be included in the RRC message (e.g., SCGFailureInformation) including a failure cause. Further, the CPA configuration ID (e.g., CPA config ID) set in association with the target PSCell configuration information for performing CPA may be included in the RRC message (e.g., SCGFailureInformation) including a failure cause. The UE 1610 may transmit an RRC message (e.g., SCGFailureInformation message) including a failure cause to the MN 1620 when the CPA procedure fails. However, the RRC message does not have to include all of the above information, and a portion of it may be omitted and other information may be added.

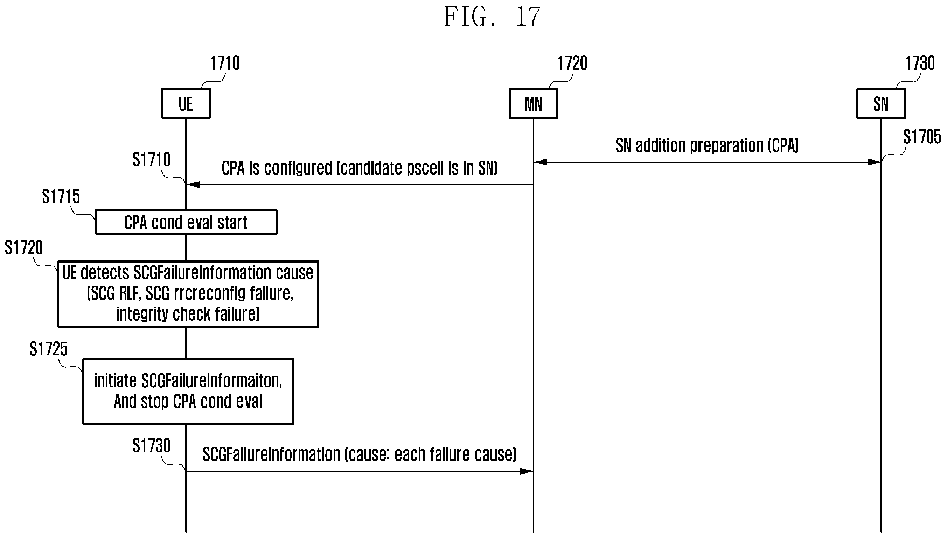

FIG. 17 is a sequence diagram illustrating a method of performing CPA operation when an SCG failure other than a CPA failure occurs according to an embodiment of the disclosure.

At step S1705, the master node (MN) 1720 and the secondary node (SN) 1730 may perform a SN addition preparation procedure for CPA.

At step S1710, the UE 1710 may receive CPA configuration information from the MN 1720 based on the SN 1730 where a candidate target PSCell resides.

At step S1715, the UE 1710 may start to evaluate whether the CPA execution condition is satisfied from the point in time when CPA is configured.

At step S 1720, the UE 1710 may determine that an SCG failure has occurred due to causes (e.g., SCG RLF, SCG RRCreconfiguration failure, integrity check failure, etc.) other than a CPA failure based on the preset criteria (or failure causes).

At step S1725, the UE 1710 may perform a SCGFailureInformation procedure, and stop evaluation of the CPA execution condition.

At step S1730, the UE 1710 may transmit an RRC message (e.g., SCGFailureInformation message) including a failure cause to the MN 1720. Here, the failure cause may be included as a cause value.

Meanwhile, in the embodiments and methods described above in the disclosure, structures or steps may be selectively applied in combination. In addition, not all of the above-described steps must be included according to configurations and/or definitions in the system, and some steps may be omitted if necessary.

Embodiments of the disclosure disclosed in this specification and drawings are presented as specific examples to easily explain the technical details of the disclosure and help understanding of the disclosure, and are not intended to limit the scope of the disclosure.

Further, the embodiments disclosed in this specification and drawings are only presented as specific examples to easily explain the content of the present disclosure and aid understanding, and are not intended to limit the scope of the disclosure, as defined by the claims.

## Claims

1. A method performed by a first base station (710) in a wireless communication system, the method comprising:
transmitting (S710, S715), to a second base station (720, 730), a first Xn message for conditional primary secondary cell group, SCG, cell, PSCell, addition, CPA, including cell group configuration information configured by the first base station, the cell group configuration information including measurement results of a terminal for a plurality of cells for SCG setup;
receiving (S735), from the second base station, a second Xn message including:
configuration information for at least one candidate PSCell, the at least one candidate PSCell being determined by the second base station from among the plurality of cells, and
at least one absolute radio frequency channel number, ARFCN, value associated with the configuration information for the at least one candidate PSCell, respectively;
generating (S740) execution condition information for CPA related to the at least one candidate PSCell based on the at least one ARFCN value associated with the received configuration information for the at least one candidate PSCell; and
transmitting (S745), to the terminal, a first radio resource control, RRC, message including the configuration information for the at least one candidate PSCell and the generated execution condition information for CPA related to the at least one candidate PSCell.

2. The method of claim 1, further comprising:
receiving (S765), from the terminal, a second RRC message including information on a configuration identifier, ID, for identifying a selected PSCell of which an execution condition is satisfied.

3. The method of claim 2, further comprising:
in case that the selected PSCell is operated by the second base station, transmitting (S770), to the second base station, a third Xn message indicating an RRC reconfiguration complete of the terminal; and
in case that the selected PSCell is not operated by the second base station, transmitting (S775), to the second base station, a fourth Xn message indicating a CPA release.

4. A method performed by a second base station (720, 730) in a wireless communication system, the method comprising:
receiving (S715), from a first base station (710), a first Xn message for conditional primary secondary cell group, SCG, cell, PSCell, addition, CPA, including cell group configuration information configured by the first base station, the cell group configuration information including measurement results of a terminal for a plurality of cells for SCG setup;
determining (S725) at least one candidate PSCell from among the plurality of cells; and
transmitting (S735), to the first base station, a second Xn message including:
configuration information for the at least one candidate PSCell, and
at least one absolute radio frequency channel number, ARFCN, value associated with the configuration information for the at least one candidate PSCell, respectively.

5. The method of claim 4, further comprising:
in case that a selected PSCell of which an execution condition is satisfied is operated by the second base station, receiving (S770), from the first base station, a third Xn message indicating a radio resource control, RRC, reconfiguration complete of the terminal; and
in case that the selected PSCell is not operated by the second base station, receiving (S775), from the first base station, a fourth Xn message indicating a CPA release.

6. A first base station (710) in a wireless communication system, the first base station comprising:
a transceiver; and
a controller configured to:
transmit (S710, S715), to a second base station (720, 730) via the transceiver, a first Xn message for conditional primary secondary cell group, SCG, cell, PSCell, addition, CPA, including cell group configuration information configured by the first base station, the cell group configuration information including measurement results of a terminal for a plurality of cells for SCG setup,
receive (S735), from the second base station via the transceiver, a second Xn message including:
configuration information for at least one candidate PSCell, the at least one candidate PSCell being determined by the second base station from among the plurality of cells, and
at least one absolute radio frequency channel number, ARFCN, value associated with the configuration information for the at least one candidate PSCell, respectively,
generate (S740) execution condition information for CPA related to the at least one candidate PSCell based on the at least one ARFCN value associated with the received configuration information for the at least one candidate PSCell, and
transmit (S745), to the terminal via the transceiver, a first radio resource control, RRC, message including the configuration information for the at least one candidate PSCell and the generated execution condition information for CPA related to the at least one candidate PSCell.

7. The first base station of claim 6, wherein the controller is further configured to:
receive (S765), from the terminal via the transceiver, a second RRC message including information on a configuration identifier, ID, for identifying a selected PSCell of which an execution condition is satisfied.

8. The first base station of claim 7, wherein the controller is further configured to:
in case that the selected PSCell is operated by the second base station, transmit (S770), to the second base station via the transceiver, a third Xn message indicating an RRC reconfiguration complete of the terminal, and
in case that the selected PSCell is not operated by the second base station, transmit (S775), to the second base station via the transceiver, a fourth Xn message indicating a CPA release.

9. A second base station (720, 730) in a wireless communication system, the second base station comprising:
a transceiver; and
a controller configured to:
receive (S710, S715), from a first base station (710) via the transceiver, a first Xn message for conditional primary secondary cell group, SCG, cell, PSCell, addition, CPA, including cell group configuration information configured by the first base station, the cell group configuration information including measurement results of a terminal for a plurality of cells for SCG setup,
determine (S720, S725) at least one candidate PSCell from among the plurality of cells,
and
transmit (S730, S735), to the first base station via the transceiver, a second Xn message including:
configuration information for the at least one candidate PSCell, and
at least one absolute radio frequency channel number, ARFCN, value associated with the configuration information for the at least one candidate PSCell, respectively.

10. The second base station of claim 9, wherein the controller is further configured to:
in case that a selected PSCell of which an execution condition is satisfied is operated by the second base station, receive (S770), from the first base station via the transceiver, a third Xn message indicating a radio resource control, RRC, reconfiguration complete of the terminal.

11. The second base station of claim 9, wherein the controller is further configured to:
in case that the selected PSCell is not operated by the second base station, receive (S775), from the first base station via the transceiver, a fourth Xn message indicating a CPA release.

## Patentansprüche

1. Verfahren, das durch eine erste Basisstation (710) in einem drahtlosen Kommunikationssystem durchgeführt wird, wobei das Verfahren Folgendes umfasst:
Übertragen (S710, S715), an eine zweite Basisstation (720, 730), einer ersten Xn-Nachricht für eine bedingte Hinzufügung, CPA, einer primären Zelle, PSCell, einer sekundären Zellengruppe, SCG, die Zellengruppen-Konfigurationsinformationen beinhaltet, die durch die erste Basisstation konfiguriert sind, wobei die Zellengruppen-Konfigurationsinformationen Messergebnisse eines Endgeräts für eine Vielzahl von Zellen zur SCG-Einrichtung beinhalten;
Empfangen (S735), von der zweiten Basisstation, einer zweiten Xn-Nachricht, die Folgendes beinhaltet:
Konfigurationsinformationen für mindestens eine in Frage kommende PSCell, wobei die mindestens eine in Frage kommende PSCell durch die zweite Basisstation aus der Vielzahl von Zellen bestimmt wird, und
mindestens einen Absolutwert einer Hochfrequenzkanalnummer, ARFCN, der jeweils den Konfigurationsinformationen für die mindestens eine in Frage kommende PSCell zugeordnet ist;
Erzeugen (S740) von Ausführungsbedingungsinformationen für die CPA bezüglich der mindestens einen in Frage kommenden PSCell auf Grundlage des mindestens einen ARFCN-Werts, der den empfangenen Konfigurationsinformationen für die mindestens eine in Frage kommende PSCell zugeordnet ist; und
Übertragen (S745), an das Endgerät, einer ersten Nachricht einer Funkressourcensteuerung, RRC, welche die Konfigurationsinformationen für die mindestens eine in Frage kommende PSCell und die erzeugten Ausführungsbedingungsinformationen für die CPA bezüglich der mindestens einen in Frage kommenden PSCell beinhaltet.

2. Verfahren nach Anspruch 1, ferner umfassend:
Empfangen (S765), von dem Endgerät, einer zweiten RRC-Nachricht, die Informationen zu einer Konfigurationskennung, ID, zum Identifizieren einer ausgewählten PSCell beinhaltet, von der eine Ausführungsbedingung erfüllt ist.

3. Verfahren nach Anspruch 2, ferner umfassend:
falls die ausgewählte PSCell durch die zweite Basisstation betrieben wird, Übertragen (S770), an die zweite Basisstation, einer dritten Xn-Nachricht, die angibt, dass eine RRC-Rekonfiguration des Endgeräts abgeschlossen ist; und
falls die ausgewählte PSCell nicht durch die zweite Basisstation betrieben wird, Übertragen (S775), an die zweite Basisstation, einer vierten Xn-Nachricht, die eine CPA-Freigabe angibt.

4. Verfahren, das durch eine zweite Basisstation (720, 730) in einem drahtlosen Kommunikationssystem durchgeführt wird, wobei das Verfahren Folgendes umfasst:
Empfangen (S715), von einer ersten Basisstation (710), einer ersten Xn-Nachricht für eine bedingte Hinzufügung, CPA, einer primären Zelle, PSCell, einer sekundären Zellengruppe, SCG, die Zellengruppen-Konfigurationsinformationen beinhaltet, die durch die erste Basisstation konfiguriert sind, wobei die Zellengruppen-Konfigurationsinformationen Messergebnisse eines Endgeräts für eine Vielzahl von Zellen zur SCG-Einrichtung beinhalten;
Bestimmen (S725) mindestens einer in Frage kommenden PSCell aus der Vielzahl von Zellen; und
Übertragen (S735), an die erste Basisstation, einer zweiten Xn-Nachricht, die Folgendes beinhaltet:
Konfigurationsinformationen für die mindestens eine in Frage kommende PSCell und
mindestens einen Absolutwert einer Hochfrequenzkanalnummer, ARFCN, der jeweils den Konfigurationsinformationen für die mindestens eine in Frage kommende PSCell zugeordnet ist.

5. Verfahren nach Anspruch 4, ferner umfassend:
falls eine ausgewählte PSCell, von der eine Ausführungsbedingung erfüllt ist, durch die zweite Basisstation betrieben wird, Empfangen (S770), von der ersten Basisstation, einer dritten Xn-Nachricht, die angibt, dass eine Rekonfiguration einer Funkressourcensteuerung, RRC, des Endgeräts abgeschlossen ist; und
falls die ausgewählte PSCell nicht durch die zweite Basisstation betrieben wird, Empfangen (S775), von der ersten Basisstation, einer vierten Xn-Nachricht, die eine CPA-Freigabe angibt.

6. Erste Basisstation (710) in einem drahtlosen Kommunikationssystem, wobei die erste Basisstation Folgendes umfasst:
einen Sendeempfänger; und
eine Steuerung, die zu Folgendem ausgelegt ist:
Übertragen (S710, S715), an eine zweite Basisstation (720, 730) über den Sendeempfänger, einer ersten Xn-Nachricht für eine bedingte Hinzufügung, CPA, einer primären Zelle, PSCell, einer sekundären Zellengruppe, SCG, die Zellengruppen-Konfigurationsinformationen beinhaltet, die durch die erste Basisstation konfiguriert sind, wobei die Zellengruppen-Konfigurationsinformationen Messergebnisse eines Endgeräts für eine Vielzahl von Zellen zur SCG-Einrichtung beinhalten,
Empfangen (S735), von der zweiten Basisstation über den Sendeempfänger, einer zweiten Xn-Nachricht, die Folgendes beinhaltet:
Konfigurationsinformationen für mindestens eine in Frage kommende PSCell, wobei die mindestens eine in Frage kommende PSCell durch die zweite Basisstation aus der Vielzahl von Zellen bestimmt wird, und
mindestens einen Absolutwert einer Hochfrequenzkanalnummer, ARFCN, der jeweils den Konfigurationsinformationen für die mindestens eine in Frage kommende PSCell zugeordnet ist,
Erzeugen (S740) von Ausführungsbedingungsinformationen für die CPA bezüglich der mindestens einen in Frage kommenden PSCell auf Grundlage des mindestens einen ARFCN-Werts, der den empfangenen Konfigurationsinformationen für die mindestens eine in Frage kommende PSCell zugeordnet ist, und
Übertragen (S745), an das Endgerät über den Sendeempfänger, einer ersten Nachricht einer Funkressourcensteuerung, RRC, welche die Konfigurationsinformationen für die mindestens eine in Frage kommende PSCell und die erzeugten Ausführungsbedingungsinformationen für die CPA bezüglich der mindestens einen in Frage kommenden PSCell beinhaltet.

7. Erste Basisstation nach Anspruch 6, wobei die Steuerung ferner zu Folgendem ausgelegt ist:
Empfangen (S765), von dem Endgerät über den Sendeempfänger, einer zweiten RRC-Nachricht, die Informationen zu einer Konfigurationskennung, ID, zum Identifizieren einer ausgewählten PSCell beinhaltet, von der eine Ausführungsbedingung erfüllt ist.

8. Erste Basisstation nach Anspruch 7, wobei die Steuerung ferner zu Folgendem ausgelegt ist:
falls die ausgewählte PSCell durch die zweite Basisstation betrieben wird, Übertragen (S770), an die zweite Basisstation über den Sendeempfänger, einer dritten Xn-Nachricht, die angibt, dass eine RRC-Rekonfiguration des Endgeräts abgeschlossen ist, und
falls die ausgewählte PSCell nicht durch die zweite Basisstation betrieben wird, Übertragen (S775), an die zweite Basisstation über den Sendeempfänger, einer vierten Xn-Nachricht, die eine CPA-Freigabe angibt.

9. Zweite Basisstation (720, 730) in einem drahtlosen Kommunikationssystem, wobei die zweite Basisstation Folgendes umfasst:
einen Sendeempfänger; und
eine Steuerung, die zu Folgendem ausgelegt ist:
Empfangen (S710, S715), von einer ersten Basisstation (710) über den Sendeempfänger, einer ersten Xn-Nachricht für eine bedingte Hinzufügung, CPA, einer primären Zelle, PSCell, einer sekundären Zellengruppe, SCG, die Zellengruppen-Konfigurationsinformationen beinhaltet, die durch die erste Basisstation konfiguriert sind, wobei die Zellengruppen-Konfigurationsinformationen Messergebnisse eines Endgeräts für eine Vielzahl von Zellen zur SCG-Einrichtung beinhalten,
Bestimmen (S720, S725) mindestens einer in Frage kommenden PSCell aus der Vielzahl von Zellen und
Übertragen (S730, S735), an die erste Basisstation über den Sendeempfänger, einer zweiten Xn-Nachricht, die Folgendes beinhaltet:
Konfigurationsinformationen für die mindestens eine in Frage kommende PSCell und
mindestens einen Absolutwert einer Hochfrequenzkanalnummer, ARFCN, der jeweils den Konfigurationsinformationen für die mindestens eine in Frage kommende PSCell zugeordnet ist.

10. Zweite Basisstation nach Anspruch 9, wobei die Steuerung ferner zu Folgendem ausgelegt ist:
falls eine ausgewählte PSCell, von der eine Ausführungsbedingung erfüllt ist, durch die zweite Basisstation betrieben wird, Empfangen (S770), von der ersten Basisstation über den Sendeempfänger, einer dritten Xn-Nachricht, die angibt, dass eine Rekonfiguration einer Funkressourcensteuerung, RRC, des Endgeräts abgeschlossen ist.

11. Zweite Basisstation nach Anspruch 9, wobei die Steuerung ferner zu Folgendem ausgelegt ist:
falls die ausgewählte PSCell nicht durch die zweite Basisstation betrieben wird, Empfangen (S775), von der ersten Basisstation über den Sendeempfänger, einer vierten Xn-Nachricht, die eine CPA-Freigabe angibt.

## Revendications

1. Procédé mis en œuvre par une première station de base (710) dans un système de communication sans fil, le procédé comprenant :
la transmission (S710, S715), à une deuxième station de base (720, 730), d'un premier message Xn pour l'ajout conditionnel, CPA, d'une cellule principale, PSCell, d'un groupe de cellules secondaires, SCG, comportant des informations de configuration de groupe de cellules configurées par la première station de base, les informations de configuration de groupe de cellules comportant des résultats de mesure d'un terminal pour une pluralité de cellules pour la configuration du SCG ;
la réception (S735), de la part de la deuxième station de base, d'un deuxième message Xn comportant :
des informations de configuration pour au moins une PSCell candidate, ladite au moins une PSCell candidate étant déterminée par la deuxième station de base parmi la pluralité de cellules, et
au moins une valeur d'un numéro de canal radiofréquence absolu, ARFCN, associée respectivement aux informations de configuration pour ladite au moins une PSCell candidate ;
la génération (S740) d'informations de condition d'exécution pour le CPA relatives à ladite au moins une PSCell candidate à partir de ladite au moins une valeur ARFCN associée aux informations de configuration reçues pour ladite au moins une PSCell candidate ; et
la transmission (S745), au terminal, d'un premier message de contrôle des ressources radio, RRC, comportant les informations de configuration pour ladite au moins une PSCell candidate et les informations de condition d'exécution générées pour le CPA relatives à ladite au moins une PSCell candidate.

2. Procédé selon la revendication 1, comprenant en outre :
la réception (S765), de la part du terminal, d'un deuxième message RRC comportant des informations sur un identifiant de configuration, ID, pour identifier une PSCell sélectionnée dont une condition d'exécution est remplie.

3. Procédé selon la revendication 2, comprenant en outre :
dans le cas où la PSCell sélectionnée est exploitée par la deuxième station de base, la transmission (S770), à la deuxième station de base, d'un troisième message Xn indiquant une reconfiguration RRC complète du terminal ; et
dans le cas où la PSCell sélectionnée n'est pas exploitée par la deuxième station de base, la transmission (S775), à la deuxième station de base, d'un quatrième message Xn indiquant une libération du CPA.

4. Procédé mis en œuvre par une deuxième station de base (720, 730) dans un système de communication sans fil, le procédé comprenant :
la réception (S715), de la part d'une première station de base (710), d'un premier message Xn pour l'ajout conditionnel, CPA, d'une cellule principale, PSCell, d'un groupe de cellules secondaires, SCG, comportant des informations de configuration de groupe de cellules configurées par la première station de base, les informations de configuration de groupe de cellules comportant des résultats de mesure d'un terminal pour une pluralité de cellules pour la configuration du SCG ;
la détermination (S725) d'au moins une PSCell candidate parmi la pluralité de cellules ;
et
la transmission (S735), à la première station de base, d'un deuxième message Xn comportant :
des informations de configuration pour ladite au moins une PSCell candidate, et
au moins une valeur d'un numéro de canal radiofréquence absolu, ARFCN, associée respectivement aux informations de configuration pour ladite au moins une PSCell candidate.

5. Procédé selon la revendication 4, comprenant en outre :
dans le cas où une PSCell sélectionnée dont une condition d'exécution est remplie est exploitée par la deuxième station de base, la réception (S770), de la part de la première station de base, d'un troisième message Xn indiquant une reconfiguration complète du contrôle des ressources radio, RRC, du terminal ; et
dans le cas où la PSCell sélectionnée n'est pas exploitée par la deuxième station de base, la réception (S775), de la part de la première station de base, d'un quatrième message Xn indiquant une libération du CPA.

6. Première station de base (710) dans un système de communication sans fil, la première station de base comprenant :
un émetteur-récepteur ; et
un dispositif de commande, configuré de manière à :
transmettre (S710, S715), à une deuxième station de base (720, 730) via l'émetteur-récepteur, un premier message Xn pour l'ajout conditionnel, CPA, d'une cellule principale, PSCell, d'un groupe de cellules secondaires, SCG, comportant des informations de configuration de groupe de cellules configurées par la première station de base, les informations de configuration de groupe de cellules comportant des résultats de mesure d'un terminal pour une pluralité de cellules pour la configuration du SCG,
recevoir (S735), de la part de la deuxième station de base via l'émetteur-récepteur, un deuxième message Xn comportant :
des informations de configuration pour au moins une PSCell candidate, ladite au moins une PSCell candidate étant déterminée par la deuxième station de base parmi la pluralité de cellules, et
au moins une valeur d'un numéro de canal radiofréquence absolu, ARFCN, associée respectivement aux informations de configuration pour ladite au moins une PSCell candidate,
générer (S740) des informations de condition d'exécution pour le CPA relatives à ladite au moins une PSCell candidate à partir de ladite au moins une valeur ARFCN associée aux informations de configuration reçues pour ladite au moins une PSCell candidate, et
transmettre (S745), au terminal via l'émetteur-récepteur, un premier message de contrôle des ressources radio, RRC, comportant les informations de configuration pour ladite au moins une PSCell candidate et les informations de condition d'exécution générées pour le CPA relatives à ladite au moins une PSCell candidate.

7. Première station de base selon la revendication 6, dans laquelle le dispositif de commande est en outre configuré de manière à :
recevoir (S765), de la part du terminal via l'émetteur-récepteur, un deuxième message RRC comportant des informations sur un identifiant de configuration, ID, pour identifier une PSCell sélectionnée dont une condition d'exécution est remplie.

8. Première station de base selon la revendication 7, dans laquelle le dispositif de commande est en outre configuré de manière à :
dans le cas où la PSCell sélectionnée est exploitée par la deuxième station de base, transmettre (S770), à la deuxième station de base via l'émetteur-récepteur, un troisième message Xn indiquant une reconfiguration RRC complète du terminal, et
dans le cas où la PSCell sélectionnée n'est pas exploitée par la deuxième station de base, transmettre (S775), à la deuxième station de base via l'émetteur-récepteur, un quatrième message Xn indiquant une libération du CPA.

9. Deuxième station de base (720, 730) dans un système de communication sans fil, la deuxième station de base comprenant :
un émetteur-récepteur ; et
un dispositif de commande, configuré de manière à :
recevoir (S710, S715), de la part d'une première station de base (710) via l'émetteur-récepteur, un premier message Xn pour l'ajout conditionnel, CPA, d'une cellule principale, PSCell, d'un groupe de cellules secondaires, SCG, comportant des informations de configuration de groupe de cellules configurées par la première station de base, les informations de configuration de groupe de cellules comportant des résultats de mesure d'un terminal pour une pluralité de cellules pour la configuration du SCG,
déterminer (S720, S725) au moins une PSCell candidate parmi la pluralité de cellules,
et
transmettre (S730, S735), à la première station de base via l'émetteur-récepteur, un deuxième message Xn comportant :
des informations de configuration pour ladite au moins une PSCell candidate, et
au moins une valeur d'un numéro de canal radiofréquence absolu, ARFCN, associée respectivement aux informations de configuration pour ladite au moins une PSCell candidate.

10. Deuxième station de base selon la revendication 9, dans laquelle le dispositif de commande est en outre configuré de manière à :
dans le cas où une PSCell sélectionnée dont une condition d'exécution est remplie est exploitée par la deuxième station de base, recevoir (S770), de la part de la première station de base via l'émetteur-récepteur, un troisième message Xn indiquant une reconfiguration complète du contrôle des ressources radio, RRC, du terminal.

11. Deuxième station de base selon la revendication 9, dans laquelle le dispositif de commande est en outre configuré de manière à :
dans le cas où la PSCell sélectionnée n'est pas exploitée par la deuxième station de base, recevoir (S775), de la part de la première station de base via l'émetteur-récepteur, un quatrième message Xn indiquant une libération du CPA.
